# EUROPÄISCHE PATENTSCHRIFT

(11) **EP 3 311 015 B1**
(45) Veröffentlichungstag und Bekanntmachung des Hinweises auf die Patenterteilung: **05.02.2020**
(21) Anmeldenummer: 16732261.9
(22) Anmeldetag: 20.06.2016
(51) Int. Cl.: F16C 7/04, F16K 11/048, F16K 11/056, F16K 11/18, F02B 75/04, F16C 7/06

(54) **LÄNGENVERSTELLBARE PLEUELSTANGE**
LONGITUDINALLY ADJUSTABLE CONNECTING ROD
BIELLE RÉGLABLE EN LONGUEUR

(30) Priorität: 18.06.2015 AT 505112015; 29.04.2016 AT 503892016
(43) Veröffentlichungstag der Anmeldung: 25.04.2018
(73) Patentinhaber: AVL List GmbH, 8020 Graz (AT)
(72) Erfinder: MELDE-TUCZAI, Helmut, 8042 Graz (AT); LICHTENEGGER, Stefan, 8511 St. Stefan ob Stainz (AT); HEIMEL, Gerhard, 8045 Graz (AT); HOEDL, Bernhard, 8051 Graz (AT)
(74) Vertreter: Breuer Friedrich Hahner Patentanwälte PartG mbB
(86) Internationale Anmeldenummer: PCT/EP2016/064193
(87) Internationale Veröffentlichungsnummer: WO 2016/203047

(56) Entgegenhaltungen:
- WO-A1-02/10568
- GB-A- 161 580
- US-A- 2 989 954
- US-A1- 2015 152 794

## Beschreibung

Die Erfindung betrifft eine längenverstellbare Pleuelstange für eine Hubkolbenmaschine, mit zumindest einem ersten Stangenteil und einem zweiten Stangenteil, wobei die beiden Stangenteile mittels einer Längenverstellvorrichtung in Richtung einer Längsachse der Pleuelstange teleskopartig zu- und/oder ineinander verschiebbar sind, wobei die Längenverstellvorrichtung über zumindest einen Hydraulikkanal mit einem Hydraulikmedium beschickbar ist und wobei der wenigstens eine Hydraulikkanal durch eine Steuereinrichtung mit zumindest einem Hydraulikmediumversorgungskanal strömungsverbindbar ist.

Um Brennkraftmaschinen hinsichtlich Emissionen und Verbrauch zu optimieren werden zunehmend Varianten mit veränderbarem Verdichtungsverhältnis untersucht. Durch Ändern der Verdichtung einer Brennkraftmaschine kann Volllast mit geringerem Verdichtungsverhältnis, Teillast und Starten mit erhöhtem Verhältnis gefahren werden. Dabei wird im Teillastbereich der Verbrauch verbessert, beim Start der Kompressionsdruck mit dem erhöhtem Verdichtungsverhältnis gesteigert und bei hoher Leistung der Spitzendruck mit verringertem Verhältnis reduziert, sowie Klopfen verhindert.

Aus WO 02/10568 A1 ist eine verstellbare Pleuelstange für einen Verbrennungsmotor bekannt, wobei eine Längenverstellung durch eine einfache Zirkulation von Fluid erreicht werden kann, das von einer Fluidquelle in eine Fluidzelle eingesaugt wird und in der Flu idzelle gehalten werden kann, um die Pleuelstange automatisch auf eine geeignete Länge zu verlängern. Zur Verkürzung der Pleuelstange kann das Fluid wieder aus der Fluidzelle abgeführt werden.

In US 2015/0152794 A1 ist eine Umschaltventileinheit für eine Brennkraftmaschine beschrieben, die ein einstellbares Verdichtungsverhältnis zur Steuerung eines Hydraulikölstroms in Hydraulikkammern einer Exzenter-Einstellvorrichtung aufweist. Die Hydraulikkammern sind über Hydraulikölzuleitungen mit Hydrauliköl befüllbar und eine Entlüftung der Hydraulikkammern über Hydraulikölableitungen ist in Abhängigkeit von einer Schaltstellung der Umschaltventileinheit erlaubt oder nicht zulässig. Die Umschaltventileinheit weist ein Betätigungsmodul mit einem linear verschiebbaren Abgreifelement, ein Ventilmodul mit Entlüftungsventilen in den Hydraulikölableitungen und Betätigungsstangen auf, die durch das Abgriffelement linear verschiebbar sind. Die Belüftungsventile werden in Abhängigkeit von der Schaltstellung des Abgriffelements geöffnet oder geschlossen.

Die AT 511 803 B1 beschreibt eine längenverschiebbare Pleuelstange für eine Brennkraftmaschine mit zwei teleskopartig ineinander verschiebbaren Stangenteilen, wobei zwischen dem ersten und den zweiten Stangenteil ein Hochdruckraum aufgespannt ist, in den ein Ölkanal einmündet, dessen Durchfluss über eine als Steuerschieber ausgebildete Steuereinrichtung gesteuert wird. Die Steuereinrichtung weist dabei eine Bewegungsrichtung auf, die normal zu einer Kurbelwellenachse der Brennkraftmaschine ausgerichtet ist.

Des Weiteren ist aus der AT 514 071 B1 eine teleskopartig verstellbare Pleuelstange bekannt, wobei ein Stangenteil der Pleuelstange einen Führungszylinder ausbildet und ein anderer Stangenteil der Pleuelstange ein im Führungszylinder längsverschiebbares Kolbenelement, wobei zwischen dem Kolbenelement und dem Führungszylinder auf einer Seite des Kolbens ein erster Hochdruckraum und auf der anderen Seite des Kolbens eine zweiter Hochdruckraum aufgespannt werden, in welche Ölkanäle einmünden, deren Durchflüsse mittels einer Steuereinrichtung mit einem Steuerschieber gesteuert werden. Die Steuereinrichtung weist hier bewegte Teile auf, die wie bei der AT 511 803 B1 normal zur Kurbelwellenachse orientiert sind, teilweise auch parallel zur Pleuelstangenlängsachse.

Unter einem Steuerschieber wird in diesem Zusammenhang ein Steuerventil mit einem Ventilraum und wenigstens einem mit dem Ventilraum strömungsverbundenen Ventileingang und wenigstens einem mit dem Ventilraum strömungsverbundenen Ventilausgang verstanden, bei dem der Ventilraum vorzugsweise zylinderförmig ausgebildet ist und wenigstens ein Ventileingang und/oder wenigstens ein Ventilausgang insbesondere radial in den Ventilraum einmünden, wobei innerhalb des Ventilraumes ein axial verschiebbarer Steuerkolben angeordnet ist, mit dem durch axiales Verschieben innerhalb des Ventilraumes die Ventileingänge bzw. -ausgänge freigegeben bzw. gesperrt werden können.

Steuerschieber werden üblicherweise mittels Dichtringen (O-Ringe) abgedichtet, insbesondere die Steuerkolben gegenüber dem umgebenden Zylinder bzw. dem umgebenden Ventilraum, wobei aber bei einer axialen Auslenkung des Steuerschiebers die radialen Öffnungen des Führungszylinders bzw. des Ventilraumes der zu steuernden Ölkanäle bzw. der Ventileingänge und -ausgänge von den Dichtringen überfahren werden und zu einem erhöhten Verschleiß und geringer Standzeit derselben führen können.

Mit Brennkraftmaschinen mit oben beschriebenen Pleuelstangen können gute Ergebnisse bei geringen Drehzahlen, wie sie beispielsweise in Nutzfahrzeugen zu erwarten sind, erzielt werden. Im Bereich höherer Drehzahlen ab ca. 3000 U/min, können jedoch zusätzliche Effekte auftreten, die ein ordnungsgemäßes Funktionieren und insbesondere ein ordnungsgemäßes Steuern der Pleuelstange erschweren können, insbesondere ein ordnungsgemäßes Steuern der Längenverstellung der Pleuelstange. Beispielsweise wirken auf in der Pleuelstange verbaute Ventilkörper, insbesondere bei höheren Drehzahlen, hohe Massenkräfte ein, die zu Leckagen bei eigentlich geschlossenen Ventilen führen können.

Eine weitere Schwierigkeit entsteht, insbesondere bei höheren Drehzahlen, durch die in der Pleuelstange bewegten Massen - dabei geht es nicht nur um die Komponenten der Steuereinrichtung sondern auch um die oben beschriebenen Ölkanäle, die mit Motoröl oder einem anderen Hydraulikmedium befüllt sind. Die enthaltene Ölsäule übt bei hohen Drehzahlen Kräfte auf das System aus, die mit bekannten Lösungen nicht beherrschbar sind.

Dem Stand der Technik sind keine Lösungen zu entnehmen, die bei hohen Drehzahlen, wie sie im PKW- und Hochleistungsbereich auftreten, eine ordnungsgemäße Steuerung von längenverstellbaren Pleuelstangen erlauben.

Es ist daher eine Aufgabe der Erfindung, wenigstens einen der genannten Nachteile des Stands der Technik zu vermeiden, insbesondere die Standzeit bei einer längenverstellbaren Pleuelstange zu erhöhen und vorzugsweise auch bei hohen Drehzahlen eine zuverlässige, reproduzierbare Verstellung der Pleuelstangenlänge zu ermöglichen.

Eine erfindungsgemäße Pleuelstange ist dadurch gekennzeichnet, dass die Steuereinrichtung ein erstes Ventil und eine zweites Ventil mit jeweils einem in einem Ventilraum angeordneten Ventilkörper aufweist, wobei die Ventilkörper jeweils durch eine Rückstellkraft gegen einen Ventilsitz pressbar sind, wobei ein erster Ventilraum des ersten Ventils mit einem ersten Hydraulikkanal und ein zweiter Ventilraum des zweiten Ventils mit einem zweiten Hydraulikkanal strömungsverbunden ist, und die Ventilkörper über eine zumindest zwischen einer ersten Stellung und einer zweiten Stellung verschiebbare Verbindungseinrichtung miteinander wirkverbunden sind, und wobei in der ersten Stellung der Verbindungseinrichtung der erste Ventilkörper und in der zweiten Stellung der Verbindungseinrichtung der zweite Ventilkörper durch die Verbindungseinrichtung jeweils entgegen der Rückstellkraft von dem zugeordneten ersten bzw. zweiten Ventilsitz abhebbar ist und der entsprechende erste bzw. zweite Ventilraum mit dem Hydraulikmediumversorgungskanal strömungsverbindbar ist, und jeweils in der anderen Stellung der Verbindungseinrichtung der erste Ventilkörper am ersten Ventilsitz bzw. der zweite Ventilkörper am zweiten Ventilsitz aufliegt und die Strömungsverbindung zum Hydraulikmediumversorgungskanal sperrt.

Die Steuereinrichtung einer erfindungsgemäßen Pleuelstange weist somit an Stelle eines Steuerschiebers einfache Hubventile auf, deren durch eine Rückstellkraft belastete, vorzugsweise federbelastete, beispielsweise kugelförmigen Ventilkörper jeweils an einen Ventilsitz gedrückt werden können, um den zugehörigen Ventilausgang zu sperren oder vom Ventilsitz abgehoben werden können, wobei durch Abheben des Ventilkörpers vom Ventilsitz der Durchfluss des entsprechenden Ölkanals geöffnet wird. Durch die Verwendung von einfachen Hubventilen an Stelle eines Steuerschiebers, insbesondere zur Steuerung der Längenverstellung, kann die Standzeit der zugehörigen Steuereinrichtung und damit die Standzeit der Pleuelstange nennenswert verbessert werden.
Die auf den Ventilkörper des ersten und/oder zweiten Ventils wirkende Rückstellkraft wird dabei vorzugsweise jeweils durch eine Ventilfeder gebildet.

Die Verbindungseinrichtung hat dabei die Aufgabe, das erste Ventil oder das zweite Ventil alternativ zu öffnen.

Unter einer Pleuelstange im Sinne der Erfindung wird dabei das üblicherweise bei Hubkolbenmaschinen vorhandene, stangenartig ausgebildete und zwischen Kolben und Kurbelwelle angeordnete Verbindungselement bezeichnet, über welches der Kolben mechanisch mit der Kurbelwelle verbunden ist.

Eine Hubkolbenmaschine im Sinne der Erfindung ist eine Maschine, mit der eine lineare Hubbewegung eines Kolbens in eine Drehbewegung einer Welle umgesetzt werden kann bzw. umgekehrt eine Drehbewegung einer Welle in eine lineare Hubbewegung eines Kolbens.

Eine Hubkolbenbrennkraftmaschine im Sinne der Erfindung, welche vereinfacht auch als Brennkraftmaschine bezeichnet wird, ist eine Hubkolbenmaschine, bei der die Linearbewegung des Kolbens durch eine Volumenänderung eines Gases erzeugt wird, wobei die Volumenänderung des Gases durch einen Verbrennungsvorgang bewirkt wird.

Der erste Stangenteil einer erfindungsgemäßen Pleuelstange ist dabei vorzugsweise der Stangenteil, welcher in einem funktionsgemäßen Einbauzustand einer erfindungsgemäßen Pleuelstange in einer Hubkolbenmaschine dem Kolben zugewandt ist und insbesondere zur Verbindung mit dem Kolben einer Hubkolbenmaschine vorgesehen ist. Dazu weist der erste Stangenteil, wie bei Pleuelstangen in der Regel üblich, vorzugsweise ein als Pleuellager ausgebildetes, kleines Pleuelauge auf, welches insbesondere derart ausgebildet ist, dass es mittels eines Kolbenbolzens mit dem Kolben verbunden werden kann.

Der zweite Stangenteil einer erfindungsgemäßen Pleuelstange ist dabei vorzugsweise der Stangenteil, welcher in einem funktionsgemäßen Einbauzustand einer erfindungsgemäßen Pleuelstange in einer Hubkolbenmaschine der Kurbelwelle zugewandt ist und insbesondere zur Verbindung mit der Kurbelwelle vorgesehen ist. Dazu weist der zweite Stangenteil vorzugsweise ein auf einer Kurbelwelle montierbares großes Pleuelauge auf, wobei das große Pleuelauge, wie bei Pleuelstangen in der Regel üblich, vorzugsweise ebenfalls als Pleuellager ausgebildet ist und insbesondere zur Befestigung der Pleuelstange an der Kurbelwelle einer Hubkolbenmaschine ausgebildet ist.

Unter einem Hydraulikkanal im Sinne der Erfindung wird eine insbesondere röhrenförmige Verbindung(sleitung) verstanden, welche dazu ausgebildet ist, von einem Hydraulikmedium durchströmt zu werden, wobei der Begriff Hydraulikkanal im Folgenden mit dem Begriff Ölkanal synonym verwendet wird.

Unter einem Hydraulikmediumversorgungskanal wird im Sinne der Erfindung ein Hydraulikkanal bzw. ein Ölkanal verstanden, welcher dazu ausgebildet ist, wenigstens eine Komponente und/oder wenigstens ein mit einem Hydraulikmedium füllbares Volumen mit einem Hydraulikmedium zu versorgen, d.h. einer Komponente und/oder einem Volumen Hydraulikmedium zuzuführen bzw. Hydraulikmedium zu einer Komponente und/oder einem Volumen zu leiten. Der Begriff Hydraulikmediumversorgungskanal wird im Folgenden dabei synonym mit dem Begriff Ölversorgungskanal verwendet.

Die Rückstellkraft, entgegen der die Ventilkörper des ersten Ventils und des zweiten Ventils jeweils von dem zugeordneten ersten bzw. zweiten Ventilsitz abhebbar sind, wird vorzugsweise jeweils durch eine entsprechende ausgebildete, mit geeignet gewählter Federkraft gewählte Ventilfeder aufgebracht.

Grundsätzlich kann die Längenverstellvorrichtung der Pleuelstange auf beliebige Weise ausgeführt werden. In einer Variante der Erfindung ist die Längenverstellvorrichtung derart ausgeführt, dass einer der beiden Stangenteile als Führungskörper ausgebildet ist und der andere Stangenteil als in im Führungskörper verschiebbares Kolbenelement, wobei insbesondere zwischen einer ersten Stirnseite des Kolbenelementes und dem Führungskörper ein erster Hochdruckraum und zwischen einer zweiten Stirnseite des Kolbenelementes und dem Führungskörper ein zweiter Hochdruckraum aufgespannt ist, wobei in den ersten Hochdruckraum der erste Hydraulikkanal einmündet und in den zweiten Hochdruckraum der zweite Hydraulikkanal. Mit einer derartig ausgebildeten Pleuelstange lässt sich auf besonders einfache Art und Weise eine längenverstellbare Pleuelstange realisieren, insbesondere eine hydraulisch längenverstellbare Pleuelstange.

Zur Längenverstellung einer derartig ausgebildeten, erfindungsgemäßen Pleuelstange kann der Steuerungseinrichtung ein vorzugsweise mit Druck beaufschlagtes Hydraulikmedium zugeführt werden, insbesondere über den Hydraulikmediumversorgungskanal. Über die Steuerungseinrichtung kann jeweils einer der beiden Hydraulikkanäle, die jeweils mit einem der beiden Hochdruckräume verbunden sind, mit dem Hydraulikmediumversorgungskanal strömungsverbunden werden.

Je nach Zustand der Steuerungseinrichtung, insbesondere je nach Stellung der Verbindungseinrichtung der Steuerungseinrichtung, ist entweder der erste Hydraulikkanal und damit der erste Hochdruckraum mit dem Hydraulikmediumversorgungskanal strömungsverbunden oder der zweite Hydraulikkanal und damit der zweite Hochdruckraum.

Je nach dem, in welchem der beiden Hochdrückräume der höhere Druck anliegt, werden die beiden Stangenteile der Pleuelstange teleskopartig auseinander oder zusammengeschoben, so dass die Pleuelstangenlänge zunimmt oder abnimmt.

Der Begriff Hydraulikmedium wird dabei im Folgenden synonym mit dem Begriff Betätigungsmedium verwendet.

Erfindungsgemäß weist die Verbindungseinrichtung einer erfindungsgemäßen Pleuelstange zumindest ein zwischen einer ersten Stellung und einer zweiten Stellung verschiebbares Verbindungselement auf, wobei der erste Ventilkörper und der zweite Ventilkörper über das Verbindungselement miteinander wirkverbunden sind.

Dabei ist bei einer erfindungsgemäßen Pleuelstange das Verbindungselement mit einem in einem Steuerzylinder verschiebbaren Steuerkolben fest verbunden, der an einen Steuerraum grenzt, in welchen eine - vorzugsweise mit dem Ölversorgungskanal strömungsverbundene - Steuerleitung einmündet. Durch Druckbeaufschlagung des Steuerraums kann der Steuerkolben entgegen einer durch eine Rückstellfeder gebildeten Rückstellkraft ausgelenkt werden.

Dadurch kann in einem funktionsgemäßen Verwendungszustand einer erfindungsgemäßen Pleuelstange in einer Brennkraftmaschine der Steuerkolben und damit auch das Verbindungselement über den im Hydraulikmediumversorgungskanal anliegenden Öldruck ausgelenkt werden. Es versteht sich von selbst, dass dies nur möglich ist, sofern der Öldruck ausreicht, die Rückstellkraft der Rückstellfeder zu überwinden. Vorzugsweise ist die Steuereinrichtung dabei derart ausgebildet, dass über die Federkraft der Rückstellfeder das Ansprechverhalten des Steuerkolbens entsprechend eingestellt werden kann, zumindest innerhalb gewisser Grenzen.

In einer besonders einfachen konstruktiven Ausgestaltung einer Brennkraftmaschine mit einer erfindungsgemäßen Pleuelstange kann zur Steuerung der Längenverstellung der Pleuelstange, insbesondere zum Auslenken des Steuerkolbens und damit zum Betätigen der Steuereinrichtung, das zur Schmierung des Pleuellagers im großen Pleuelauge vorgesehene, diesem Bereich zugeführte Schmieröl bzw. Motoröl genutzt werden, wobei das Schmieröl dazu vorzugsweise über den Hydraulikmediumversorgungskanal der Steuereinrichtung zugeführt werden kann.

D.h., eine auf die vorbeschriebene Weise ausgebildete, erfindungsgemäße Pleuelstange ermöglicht es insbesondere, zur Steuerung der Längenverstellung der Pleuelstange den in der Brennkraftmaschine anliegenden Öldruck auszunutzen, so dass keine zusätzliche Öldruckerzeugungseinrichtung erforderlich ist. In der Regel sind die beim Betrieb einer Brennkraftmaschine auftretenden Öldrücke auch dazu geeignet.

In einer weiteren vorteilhaften Ausgestaltung einer erfindungsgemäßen Pleuelstange sind die Ventilkörper und die Verbindungseinrichtung, insbesondere die Ventilkörper und das Verbindungselement, an sich getrennte Bauteile, wobei die Verbindungseinrichtung, insbesondere das Verbindungselement, in der ersten Stellung vom zweiten Ventilkörper und in der zweiten Stellung vom ersten Ventilkörper beabstandet ist. Somit ist gewährleistet, dass bei großem Hub immer nur ein Ventil geöffnet ist und das jeweilige andere Ventil geschlossen ist. Bei kleinerem Hub können im Prinzip auch beide Ventile geöffnet sein.

In einer weiteren vorteilhaften Ausgestaltung einer erfindungsgemäßen Pleuelstange ist das Verbindungselement als axial verschiebbare Verbindungstange ausgebildet.

Vorzugsweise ist das Verbindungselement dabei parallel zur Längsmittelebene der Pleuelstange oder in der Längsmittelebene der Pleuelstange angeordnet und insbesondere parallel zur Längsmittelebene der Pleuelstange oder in der Längsmittelebene der Pleuelstange axial verschiebbar, wobei die Längsmittelebene der Pleuelstange bevorzugt einer Schwingebene der Pleuelstange entspricht.
In einer alternativen Ausgestaltung ist das Verbindungselement, insbesondere die Verbindungsstange, hingegen normal zur Längsmittelebene der Pleuelstange angeordnet und insbesondere normal zur Längsmittelebene oder in einer Ebene normal zur Längsmittelebene der Pleuelstange axial verschiebbar.

In einer weiteren vorteilhaften Ausgestaltung einer erfindungsgemäßen Pleuelstange ist das Verbindungselement als normal zur Längsachse der Pleuelstange angeordnete, axial verschiebbare Verbindungsstange ausgebildet.

Das Verbindungselement kann dabei insbesondere als normal zur Längsachse der Pleuelstange angeordnete, axial in einer Führung der Pleuelstange verschiebbare Verbindungstange ausgebildet sein. Das Verbindungselement hat die Aufgabe, das erste Ventil oder das zweite Ventil alternativ zu öffnen.

Je nach Stellung der Verbindungseinrichtung bzw. des Steuerkolbens ist jeweils das erste Ventil oder das zweite Ventil der Steuereinrichtung geöffnet, so dass der Hydraulikmediumversorgungskanal entweder mit dem ersten Hochdruckraum oder dem zweiten Hochdruckraum in der Pleuelstange strömungsverbunden ist. Infolgedessen kann aus dem jeweiligen, zugehörigen Hochdruckraum unter Druck stehendes Hydraulikmedium über den Hydraulikmediumversorgungskanal abgeführt werden. Insbesondere gleichzeitig entsteht infolge der in einer Brennkraftmaschine während der Hubbewegungen der Pleuelstange wirkenden Massenkräfte infolge der Beschleunigungen der Pleuelstange sowie über die infolge eines Verbrennungsvorgangs auf die Pleuelstange wirkenden Kräfte eine Sogwirkung, die so stark ist, dass das eigentlich geschlossene andere Ventil infolge der Sogwirkung geöffnet wird (der Ventilkörper hebt infolge der Sogwirkung vom Ventilsitz ab), so dass sich der jeweils andere Hochdruckraum mit Hydraulikmedium füllt. Mit zunehmender Füllung dieses Hochdruckraumes wird aus dem anderen Hochdruckraum zunehmend Hydraulikmedium abgeführt. Dadurch ändert sich die Pleuelstangenlänge. Je nach Ausgestaltung der Pleuelstange, insbesondere der Steuereinrichtung sowie je nach Betriebszustand der Brennkraftmaschine können mehrere Hübe der Pleuelstange erforderlich sein, bis eine maximal mögliche Längenänderung der Pleuelstange erreicht ist.

In einer besonders vorteilhaften Ausgestaltung einer erfindungsgemäßen Pleuelstange ist das Verbindungselement, vorzugsweise die Verbindungsstange, entlang einer Verschiebeachse verschiebbar, wobei die Verschiebeachse vorzugsweise nicht normal zur Längsachse der Pleuelstange verläuft, sondern insbesondere mit einer Normalebene auf eine Längsachse der Pleuelstange einen Winkel α aufspannt, für welchen folgende Beziehung gilt:0°< α <=90°. Die Beziehung lautet in Worten: 0° kleiner Winkel α kleiner bzw. gleich 90°.

Die Verschiebeachse des Verbindungselementes ist also besonders bevorzugt geneigt zu einer Normalebene auf die Längsachse der Pleuelstange ausgebildet. Die Verschiebeachse kann damit zwischen einer Position praktisch normal zu einer Längsachse der Pleuelstange (Winkel α nahe 0°) bis hin zu einer Position parallel zu einer Längsachse der Pleuelstange verlaufend (Winkel α =90°) angeordnet sein. Durch die geneigte Anordnung lassen sich durch eine günstige Wahl des Winkels die störenden Einflüsse der Trägheit der Hydraulikmediumsäule in den Hydraulikkanälen und der Komponenten der Steuerungseinrichtung, insbesondere des Verbindungselements, kompensieren. Der Hydraulikmediumversorgungskanal verläuft in einer Variante der Erfindung zwischen einem Pleuellager des großen Pleuelauges (wobei der Hydraulikmediumversorgungskanal günstigerweise über eine Entnahmebohrung in das Pleuellager bzw. in eine im Pleuellager ausgeführte Nut mündet) und der Steuereinrichtung. Störungen bzw. Fehlfunktionen bei der Ansteuerung der Steuereinrichtung können somit vermieden werden. Als Hydraulikmedium kann beispielsweise Motoröl verwendet werden. Außerdem können durch diese Anordnung weitere störende Einflüsse auf Komponenten der Längenverstellung, die sich bei hohen Drehzahlen ergeben, minimiert werden - Beispiele dafür sind Ventilelemente und sonstige Verstellmechanismen, deren Wirkung durch bei hohen Drehzahlen auftretende Trägheitskräfte beeinträchtigt wird.

Das Verbindungselement kann in einer einfachen Ausführung der Erfindung parallel oder koaxial zur Längsachse der Pleuelstange angeordnet sein, was einem Winkel α von 90° entspricht. Besonders gute Ergebnisse lassen sich jedoch erzielen, wenn der Winkel α zwischen 30° und 60°, vorzugsweise zwischen 40° und 50, beträgt.

In einer Variante der Erfindung ist die Verschiebeachse parallel zu oder zusammenfallend mit einer Ölresultierenden angeordnet ist. Als Ölresultierende wird dabei die Hydraulikmediumsäule zwischen der Entnahmestelle im großen Pleuelauge und ihrem Wirkpunkt auf die Steuereinrichtung verstanden, wobei in einer Variante der Erfindung die Ölresultierende durch eine Verbindungslinie zwischen der Entnahmestelle im großen Pleuelauge (im Falle einer Entnahmebohrung der Bohrungsmittelpunkt) und der Wirkposition der Hydraulikmediumsäule auf die Steuereinrichtung angenähert wird. Der Begriff Ölresultierende schließt die Verwendung anderer Hydraulikmedien außer Öl nicht aus. Nachfolgend wird der Begriff Ölsäule synonym für den Begriff Hydraulikmediumsäule verwendet. Dadurch, dass die Verschiebeachse parallel zu oder zusammenfallend mit der Ölresultierenden ausgebildet wird, können sich die Trägheitskraft der Hydraulikmediumsäule zwischen der Entnahme im Pleuellager und dem Wirkpunkt auf und die Massenkräfte der Steuereinrichtung kompensieren. Zusätzlich können das Material und Gewicht der Steuereinrichtung dahingehend optimiert werden, dass die oben beschriebene Kompensation besonders effektiv wirkt. Mit diesen Ausführungen lassen sich neben den Trägheitseinflüssen des Hydraulikmediums auch weitere, bei hohen Drehzahlen ab ca. 3000 U/min auf die Komponenten der Steuereinrichtung wirkende Kräfte bestmöglich reduzieren.

Die Anordnung der Verschiebeachse des Verbindungselementes hinsichtlich der Ölresultierenden erlaubt damit ein Abgleichen der Phasen der Schwingbewegungen der Ölsäule und des Verbindungselementes. Die Amplitude der Schwingungen kann durch Anpassen der Masse des Verbindungselementes so ausgeglichen werden, dass die Trägheitskraft des Verbindungselements der Trägheitskraft der Ölsäule (insbesondere der Kraft, die auf das Verbindungselement wirkt) äquivalent ist. Die Kraftkomponente parallel zur Längsachse der Pleuelstange einer Rückstellfeder des Verbindungselements wirkt dabei in Richtung des kleinen Pleuelauges. Mit anderen Worten wird also erfindungsgemäß die Verschiebeachse des Verbindungselements parallel zu einer Ölresultierenden angeordnet und die Masse des Verbindungselements an die Masse der Ölresultierenden angepasst. Dabei kann die Massenanpassung auf die grundsätzliche oder beschleunigte Masse (insbesondere bei hohen Drehzahlen) der Ölresultierenden, also des in den Zuleitungen befindlichen Hydraulikmediums, abgestimmt werden.

Wie oben beschrieben geht der Hydraulikmediumversorgungskanal üblicherweise vom dem großen Pleuelauge zugeordneten Pleuellager aus. Dabei kann es während des Betriebs der Brennkraftmaschine insbesondere in diesem Bereich zu sehr hohen Beschleunigungskräften kommen. In einer Variante der Erfindung geht daher der Hydraulikmediumversorgungskanal von einem Bereich des Pleuellagers aus, welcher sich in einem Bereich zwischen 40° und 320° Umfangswinkel des großen Pleuelauges befindet, wobei mit 0° jener Schnittpunkt zwischen der Längsachse der Pleuelstange und dem großen Pleuelauge definiert ist, welcher die geringste Entfernung zum kleinen Pleuelauge aufweist. Besonders günstige Ergebnisse haben sich ergeben, wenn der Hydraulikmediumversorgungskanal vom großen Pleuelauge in einem Bereich von etwa 315° Umfangswinkel ausgeht. Diese Anordnung ist insbesondere vorteilhaft, wenn der Winkel α im Bereich von 30°-60° gewählt wird. Wenn der Winkel α im Bereich von 90° gewählt wird, ist es günstig, wenn der Hydraulikmediumversorgungskanal in einem Bereich zwischen 135° und 225°, insbesondere 180° ausgeht.

D.h., in einer vorteilhaften Ausgestaltung einer erfindungsgemäßen Pleuelstange geht der Hydraulikmediumversorgungskanal von einem Bereich des Pleuellagers aus, welcher sich in einem Bereich zwischen 40° und 320°, vorzugsweise etwa 315°, Umfangswinkel des großen Pleuelauges befindet, wobei mit 0° jener Schnittpunkt zwischen der Längsachse der Pleuelstange und dem großen Pleuelauge definiert ist, welcher die geringste Entfernung zum kleinen Pleuelauge aufweist.

Dadurch können störende Einflüsse durch die Trägheit der Ölsäule minimiert und kürzere Bohrungen verwendet werden. Da außerdem der Bereich des Pleuellagers zwischen 320° und 40° durch die Brennkraft während des Betriebs der Pleuelstange besonders druckbelastet ist und Bohrungen, Ausnehmungen und Nuten in diesem Bereich zu einer Schwächung, im Extremfall zu Lagerschäden im großen Pleuelauge führen können,-lässt sich dieses Risiko durch das Vorsehen der Bohrungen außerhalb dieses Bereichs reduzieren.

In einer einfachen und platzsparenden Ausführungsvariante der Erfindung ist vorgesehen, dass eine erste Hubachse des ersten Ventilkörpers achsgleich mit der Längsachse der Verschiebestange, d.h. der Verbindungsstange, ausgebildet ist, wobei das erste Ventil im Bereich eines ersten Endes der Verbindungsstange angeordnet ist.

Des Weiteren kann in einer einfach zu fertigenden und platzsparenden Ausführung vorgesehen sein, dass eine zweite Hubachse des zweiten Ventilkörpers achsgleich mit der Längsachse der Verbindungsstange ausgebildet ist, wobei das zweite Ventil im Bereich eines zweiten Endes der Verbindungstange angeordnet ist, und wobei vorzugsweise die Ventilsitze des ersten und des zweiten Ventils einander abgewandt sind. Die Hubachsen der Ventilkörper und die Längsachse der Verbindungsstange sind somit normal zur Längsachse der Pleuelstange angeordnet.

Für Brennkraftmaschinen mit hohen Drehzahlen, beispielweise über 4000 U/min, kann es jedoch vorteilhaft sein, wenn die erste Hubachse des ersten Ventilkörpers nicht achsgleich mit der Längsachse der Verbindungsstange verläuft, sondern wenn die erste Hubachse unter einem ersten Winkel von etwa 90° +/- 60° zur Längsachse der Verbindungsstange geneigt angeordnet ist. Dadurch kann ein Abheben des ersten Ventilkörpers vom ersten Ventilsitz bei hohen Drehzahlen in Folge der Massenkräfte vermieden werden.

In einer weiteren Ausführungsform einer Pleuelstange kann zwischen dem ersten Ventilkörper und der Verbindungsstange zumindest ein vorzugsweise stangenförmiges erstes Übertragungselement axial verschiebbar angeordnet sein, wobei vorzugsweise die erste Verschiebeachse des Übertragungselementes achsgleich zur ersten Hubachse des ersten Ventilkörpers angeordnet ist. Dadurch lässt sich auf besonders einfache Art und Weise eine axiale Verschiebung des Verbindungselementes in eine Hubbewegung des zugehörigen, ersten Ventilkörpers entlang der ersten Hubachse, d.h. in ein Abheben des ersten Ventilkörpers entlang der ersten Hubachse, umsetzen.

Brennkraftmaschinen mit noch höherer Drehzahl - beispielsweise bis 8800 U/min - können betrieben werden, wenn auch die zweite Hubachse des zweiten Ventilkörpers unter einem zweiten Winkel von etwa 90° +/- 60° zur Längsachse der Verbindungsstange geneigt angeordnet ist. Dies verhindert - wie schon bei ersten Ventilkörper - auch ein Abheben des zweiten Ventilkörpers vom zweiten Ventilsitz bei sehr hohen Drehzahlen in Folge der Massenkräfte.

D.h. vorzugsweise, insbesondere bei einer Pleuelstange, die in einer Brennkraftmaschine mit Drehzahlen oberhalb von 3000 U/min eingesetzt werden soll, ist wenigstens eine Hubachse, d.h. die erste Hubachse des ersten Ventilkörpers und/oder die zweite Hubachse des zweiten Ventilkörpers, unter einem Winkel von etwa 90° +/- 60° zur Längsachse der Verbindungsstange geneigt angeordnet.

Für höhere Drehzahlen, insbesondere bei Drehzahlen von ca. 4000 U/min bis ca. 8800 U/min, ist es besonders vorteilhaft, wenn die erste Hubachse und die zweite Hubachse, d.h. beide Hubachsen, jeweils unter einem Winkel von etwa 90° +/- 60° geneigt zur Längsachse der Verbindungsstange angeordnet sind.

In einer weiteren Ausführungsform einer Pleuelstange kann, insbesondere in analoger Weise, zwischen dem zweiten Ventilkörper und der Verbindungsstange zumindest ein vorzugsweise stangenförmiges, zweites Übertragungselement axial verschiebbar angeordnet sein, wobei vorzugsweise die zweite Verschiebeachse des zweiten Übertragungselementes achsgleich zur zweiten Hubachse des zweiten Ventilkörpers angeordnet ist. Dadurch lässt sich entsprechend auf besonders einfache Art und Weise eine axiale Verschiebung des Verbindungselementes in eine Hubbewegung des zugehörigen, zweiten Ventilkörpers entlang der zweiten Hubachse, d.h. in ein Abheben des zweiten Ventilkörpers entlang der zweiten Hubachse, umsetzen.

Um auf einfache Weise eine Umlenkung der Betätigungskraft der Verbindungsstange zum ersten Ventil bzw. zweiten Ventil hin zu ermöglichen, d.h. eine Umwandlung der axialen Verschiebebewegung in eine Hubbewegung des zugehörigen Ventilkörpers, ist es vorteilhaft, wenn zwischen dem ersten Übertragungselement und der Verbindungsstange und/oder zwischen dem zweiten Übertragungselement und der Verbindungsstange zumindest ein vorzugsweise kugelförmiges Umlenkelement angeordnet ist, wobei besonders vorzugsweise das Umlenkelement in einer die Aufnahmebohrungen der Verbindungsstange und des ersten bzw. zweiten Übertragungselementes verbindenden und unter einem Winkel größer 0° zu diesen geneigten Umlenkbohrung angeordnet ist. Die Verbindungsstange wirkt somit indirekt über zumindest ein Umlenkelement und zumindest ein Übertragungselement auf den Ventilkörper des entsprechenden ersten bzw. zweiten Ventils ein. Die Verwendung von Umlenkelementen hat den Vorteil, dass die Verbindungsstange mit sehr geringer Dicke gebaut werden kann, da die Dicke keinen Einfluss auf den Hubweg der Ventilkörper hat.

D.h., in einer weiteren Ausführungsform einer Pleuelstange kann zwischen dem ersten Übertragungselement und der Verbindungsstange und/oder zwischen dem zweiten Übertragungselement und der Verbindungsstange zumindest ein vorzugsweise kugelförmiges Umlenkelement angeordnet sein, wobei das Umlenkelement besonders bevorzugt in einer die Aufnahmebohrungen der Verbindungsstange und des ersten bzw. zweiten Übertragungselementes verbindenden und unter einem Winkel größer 0° zu diesen geneigten Umlenkbohrung angeordnet ist.

Alternativ zu einem zwischen Verbindungsstange und Übertragungselement angeordneten Umlenkelement, d.h. in einer alternativen Ausführungsform einer Pleuelstange, kann vorgesehen sein, dass die Verbindungsstange direkt auf das erste bzw. zweite Übertragungselement einwirkt, zumindest in einer Stellung.

Dabei ist zumindest ein Ende des Verbindungselementes, insbesondere zumindest ein Ende der Verbindungsstange, und/oder des ersten und/oder zweiten Übertragungselementes konisch oder sphärisch geformt. In diesem Fall hat die Dicke der Verbindungsstange Einfluss auf den maximal möglichen Hubweg des anzusteuernden Ventilkörpers. Die Dicke der Verbindungsstange sollte zumindest den doppelten Hubweg des Ventilkörpers betragen. In diesem Falle kann auf ein separates Umlenkelement verzichtet werden.
Dadurch können die beispielsweise durch Kugeln gebildeten Ventilkörper leicht und widerstandsarm ausgelenkt werden.

Als Dicke der Verbindungsstange wird bei einer Steuerungseinrichtung mit wenigstens einem Ventil mit einem nicht achsgleich zur Verbindungsstange verlaufendem Hubweg der Durchmesser der Vebindungsstange in einer Richtung parallel zu diesem Hubweg verstanden. Dies gilt sowohl für Verbindungsstangen mit rundem Querschnitt als auch für Verbindungsstangen mit n-eckigem Querschnitt.

Bei einer Steuerungseinrichtung mit Ventilen, deren Hubachsen beide achsgleich zur Verbindungsstange verlaufen, ist die Dicke der Verbindungsstange vorzugsweise der maximale Durchmesser der Verbindungsstange.

In einer weiteren Ausführungsform einer Pleuelstange, insbesondere in einer einfachen und platzsparenden Ausführungsvariante der Erfindung, ist vorzugsweise die erste Hubachse des ersten Ventilkörpers normal zur Verschiebeachse des Verbindungselementes und/oder zur Längsachse der Pleuelstange ausgebildet ist, wobei das erste Ventil im Bereich eines ersten Endes des Verbindungselementes angeordnet ist.

Des Weiteren kann in einer weiteren Ausführungsform einer Pleuelstange, insbesondere in einer einfach zu fertigenden und platzsparenden Ausführung, vorgesehen sein, dass die zweite Hubachse des zweiten Ventilkörpers normal zur Verschiebeachse des Verbindungselementes und/oder der Längsachse der Pleuelstange ausgebildet ist, wobei das zweite Ventil im Bereich eines zweiten Endes des Verbindungselementes angeordnet ist. Die Hubachsen der Ventilkörper sind somit in Normalebenen zur Verschiebeachse des Verbindungselementes und/oder in Normalebenen zur Längsachse der Pleuelstange angeordnet. Die erste und die zweite Hubachse des ersten bzw. zweiten Ventilkörpers liegen somit in voneinander beabstandeten Ebenen, wobei der Abstand der beiden Ebenen günstigerweise größer ist als die Länge des Verbindungselementes.

In einer Variante der Erfindung sind die erste Hubachse des ersten Ventilkörpers und/oder die zweite Hubachse des zweiten Ventilkörpers parallel zu einer Kurbelwellenachse verlaufend ausgebildet. In einer weiteren Variante kann auch die Verschiebeachse des Verbindungselements parallel zur Kurbelwellenachse verlaufend ausgebildet sein, d.h. normal zur Längsmittelebene bzw. der Schwingebene der Pleuelstange angeordnet sein. Dadurch wird verhindert, dass Trägheitskräfte des Ventilkörpers in Federrichtung der Ventilkörpervorspannung wirken und das Ventil dadurch ungewollt öffnen. Zusätzlich können die Ventilkörper so ausgebildet sein und/oder geführt werden, dass ein ungewolltes Öffnen der Ventile durch Trägheitseinfluss verhindert wird.

Eine stabile Position des Verbindungselementes bei geringem Steuerdruck lässt sich erreichen, wenn das Verbindungselement entgegen der Kraft einer Rückstellfeder auslenkbar ist, wobei vorzugsweise eine parallel zur Längsachse der Pleuelstange gerichtete Kraftkomponente der Rückstellkraft in Richtung des kleinen Pleuelauges wirkt. Auf diese Weise kann auch bei sehr hohen Drehzahlen der Brennkraftmaschine eine zuverlässige Steuerung der Längenverstellung gewährleistet werden.

In weiteren Ausführung der Erfindung kann vorgesehen sein, dass der Steuerzylinder an seinem äußeren Umfang einen vorzugsweise durch eine umlaufende Ringnut gebildeten Ringraum aufweist, welcher mit dem Steuerraum oder einem Hochdruckraum strömungsverbunden ist. Dadurch kann ein unbeabsichtigtes Verschieben des Steuerkolbens und damit der Verschiebeeinrichtung in bestimmten Betriebsbereichen, etwa durch Druckstöße beim Öffnen eines der beiden Ventile vermieden werden, weil der Steuerkolben durch die Befüllung des Ringraumes geklemmt bzw. blockiert wird.

Bei einer Pleuelstange, deren Steuereinrichtung zumindest einen in Richtung einer Verschiebeachse verschiebbar gelagerten Teil aufweist, wobei die Verschiebeachse vorzugsweise in einer Schwingebene der Pleuelstange -und insbesondere normal zur Längsachse der Pleuelstange - angeordnet ist, kann im Rahmen der Erfindung des Weiteren vorgesehen sein, dass zumindest ein hin- und hergehender Teil der Steuereinrichtung zumindest einen Auftriebskörper aufweist oder zumindest teilweise als Auftriebskörper ausgebildet ist.

Der hin- und hergehende bzw. in einer Richtung verschiebbar gelagerte Teil der Steuereinrichtung ist vorzugsweise der Steuerkolben und/oder die Verbindungseinrichtung, insbesondere das Verbindungselement.

In einer besonders bevorzugten Ausführung der Erfindung ist vorgesehen, dass die Verbindungseinrichtung zumindest einen Auftriebskörper aufweist oder zumindest teilweise als Auftriebskörper ausgebildet ist. Dabei kann die Verbindungsstange beispielsweise hohl ausgeführt sein und somit selbst einen Auftriebskörper ausbilden. Alternativ oder zusätzlich dazu kann vorgesehen sein, dass zumindest ein Ventilkörper zumindest einen Auftriebskörper aufweist oder zumindest teilweise als Auftriebskörper ausgebildet ist.

Der im Betätigungsmedium schwimmende Auftriebskörper weist vorzugsweise eine geringere Dichte auf, als das betätigende Öl, beispielsweise Motoröl, d.h. als ein Betätigungsmedium, mit welchem die Steuerungseinrichtung betätigbar ist, wobei die Steuereinrichtung in einem funktionsgemäßen Verwendungszustand der Pleuelstange in einer Hubkolbenmaschine vorzugsweise mit dem in der Hubkolbenmaschine geführten Schmieröl bzw. Motoröl betätigbar ist. Der Auftriebskörper kann als Hohlkörper oder als geschlossenporiger Schaumkörper, beispielsweise aus Polystyrol, ausgebildet sein. Bevorzugt ist der Auftriebskörper dabei fest mit dem hin- und hergehenden Teil verbunden oder integral mit diesem ausgebildet.

Durch den fest mit dem hin- und hergehenden Teil verbundenen oder integral mit diesem ausgebildeten Auftriebskörper kann die beschleunigte Masse reduziert werden, wobei das archimedische Prinzip, dass der statische Auftrieb eines Körpers in einem Medium genauso groß ist wie die Gewichtskraft des vom Körper verdrängten Mediums, zur Anwendung kommt.

All die genannten Maßnahmen tragen dazu bei, dass die Dichte des Gesamtsystems und die Massen, auf welche Querbeschleunigungen zu Folge der Kurbelwellenumdrehung wirken, wesentlich reduziert werden können. Auf diese Weise lassen sich Motordrehzahlen weit über 7000 U/min realisieren, ohne dass die Funktion der Längenverstellbarkeit der Pleuelstange eingeschränkt wird.

Vorzugsweise ist zumindest ein hin- und hergehender Teil der Steuereinrichtung durch einen in einem Zylinder verschiebbar gelagerten Steuerkolben gebildet, dessen erste Stirnseite an einen mit Öl bzw. mit dem Betätigungsmedium beaufschlagbaren Steuerraum und dessen zweite Stirnseite an einen eine Rückstellfeder aufweisenden Federraum grenzen. In einer bevorzugten Ausführung der Erfindung ist dabei vorgesehen, dass zumindest ein Auftriebskörper im Bereich der ersten Stirnseite und/oder im Bereich der zweiten Stirnseite des Steuerkolbens angeordnet ist, wobei vorzugsweise der Steuerkolben zwischen dem Steuerraum und dem Federraum definierte Leckagen aufweist.

Eine wesentliche Reduktion der beschleunigten Masse kann insbesondere dann erreicht werden, wenn sowohl im Bereich der ersten Stirnseite, als auch im Bereich der an den Federraum grenzenden zweiten Stirnseite je ein Auftriebskörper angeordnet ist. Dazu ist es notwendig, dass der Federraum mit dem Öl geflutet wird, wobei es grundsätzlich nicht notwendig ist, den Federraum zu fluten, sondern nur im Zusammenhang mit der Auftriebsfunktion, wenn mittels eines Auftriebskörper die Massenkräfte reduziert werden sollen. Dies, d.h. das Fluten des Federraumes, lässt sich mit besonders geringem Aufwand erreichen, wenn der Steuerkolben zwischen dem Steuerraum und dem Federraum eine definierte Leckage aufweist, wobei vorzugsweise der Federraum mit einem Speicherraum strömungsverbunden ist, welcher beispielsweise im selben Stangenteil der Pleuelstange wie die Steuereinrichtung angeordnet sein kann.

Unter einer Leckage wird im Sinne der Erfindung ein Übertritt von Öl bzw. des Hydraulikmediums über schmale Ritzen und Spalte bzw. durch schmale Ritzen und Spalte hindurch infolge der anliegenden Drücke verstanden.

Unter einer definierten Leckage wird eine Leckage verstanden, die konstruktiv bewusst vorgesehen bzw. ausgebildet worden ist, wobei dazu die Abmessungen der zusammenwirkenden Bauteile, insbesondere das Toleranzspiel bzw. die Passung der Bauteile zueinander, vorzugsweise derart gewählt sind, dass sich eine definierte Leckage einstellt, d.h. ein definierter Übertritt von Öl bzw. Hydraulikmedium durch schmale Ritzen und Spalte infolge des anliegenden Drucks.

Wenn der Speicherraum über eine Drossel mit dem Kurbelgehäuse verbunden ist, lässt sich ein unbehinderter Ölrücklauf in den Kurbelgehäuseraum erreichen.

Somit ist der Federraum des Steuerkolbens stets mit Öl gefüllt, da durch die hin- und hergehenden Bewegungen des Steuerkolbens immer genügend Öl aus dem Speicherraum und/oder durch die Leckagen nachgesaugt werden kann. Die Drossel ermöglicht dabei eine Dämpfung der Bewegung des Steuerkolbens, wodurch dieser weniger empfindlich auf eventuell rücklaufende Druckwellen ist.

Bei Kaltstart besteht der Wunsch nach einer hohen Verdichtung. Allerdings herrscht im kalten Zustand des Motors ein hoher Öldruck im Schmierölkreislauf, wodurch die Pleuelstange verkürzt werden würde, was dem Wunsch nach einer hohen Verdichtung entgegensteht. Um dieses Problem zu vermeiden kann im Rahmen der Erfindung vorgesehen sein, dass die Verbindungseinrichtung und/oder der Steuerkolben zumindest ein Thermoelement aufweist.

Besonders vorteilhaft ist es dabei wenn das Verbindungselement der Verbindungseinrichtung als eine vorzugsweise normal zur Längsachse der Pleuelstange angeordnete, axial verschiebbare Verbindungstange ausgebildet ist, welche - vorzugsweise im Bereich des Steuerkolbens - axial geteilt ist, wobei das Thermoelement zwischen einem ersten Verbindungsstangenteil und einem zweiten Verbindungsstangenteil, besonders vorzugsweise zwischen dem ersten Verbindungsstangenteil und dem Steuerkolben angeordnet ist.

Das Thermoelement hat im kalten Zustand eine kürzere Einbaulänge als im warmen Zustand. Derartige Thermoelemente mit einem temperatursensiblen Dehnstoffelement mit beispielsweise Öl, Wachs, Hartparaffin oder Metall als Dehnstoff werden beispielsweise auch bei Thermostatventilen von Brennkraftmaschinen eingesetzt.

Im kalten Zustand kompensiert das Thermoelement den hohen Steuerdruck im kalten Schmierölkreislauf, weshalb eine Verkürzung der Pleuelstange und somit Absenkung der Verdichtung bei Kaltstart vermieden wird. Durch den zusammengezogenen Dehnstoff des Thermoelementes ist die Länge des Verbindungselementes verkürzt, weshalb ein Öffnen des ersten Ventils unterbleibt und der Druck im ersten Hochdruckraum erhalten bleibt. Bei Erreichen der Betriebstemperatur dehnt sich der Dehnstoff im Thermoelement aus, wodurch das Verbindungselement die zur Betätigung des ersten Ventils notwendige normale Länge erreicht. Die gewünschten Verdichtungswerte können nun gemäß der Steuerung durch das Motorkennfeld eingestellt werden. Beispielsweise wird für den Niedriglastbereich hohe Verdichtung und für den Hochlastbereich niedrige Verdichtung eingestellt.

Die Brennkraftmaschine wird üblicherweise unmittelbar vor dem Abstellen in der Teillast und mit hoher Verdichtung betrieben. Wenn der Motor abgestellt wird, hat sich die für den Kaltstart gewünschte hohe Verdichtung eingestellt.

Um zu vermeiden, dass nach längerer Ruhezeit das Öl aus dem ersten Hochdruckraum durch das Kolbengewicht ausgepresst wird, kann zwischen dem ersten und dem zweiten Stangenteil ein in Richtung Pleuelstangenverlängerung wirkendes Federelement angeordnet sein, wobei vorzugsweise das Federelement als Tellerfeder ausgebildet ist. Durch das Federelement wird der zweite Stangenteil der Pleuelstange in seiner oberen Position gehalten.

Beim Verstellen der Länge der Pleuelstange kann es eventuell zu Druckwellen im hydraulischen System kommen, welche einerseits zu einem ungewünschten Verstellen der Steuereinrichtung und andererseits zu nachteiligen Einflüssen oder Schäden im restlichen Ölsystem des Fahrzeuges führen können. Um dies zu vermeiden ist in einer besonders bevorzugten Ausführung der Erfindung vorgesehen, dass im ersten Ölkanal bzw. im ersten Hydraulikkanal zumindest eine erste Drosseleinrichtung und/oder im zweiten Ölkanal zumindest eine zweite Drosseleinrichtung angeordnet ist. Durch die Drosseleinrichtungen ist es möglich rücklaufende Druckwellen zu vermeiden oder zumindest auf ein unschädliches Ausmaß abzubremsen. Dabei kann in einem der beiden Ölkanäle oder in beiden Ölkanälen jeweils eine Drosseleinrichtung vorgesehen sein.

Um trotz der Drosseleinrichtungen ein rasches Füllen der Hochdruckräume zu ermöglichen, kann in weiterer Ausführung der Erfindung vorgesehen sein dass die erste Drosseleinrichtung und/oder die zweite Drosseleinrichtung durch einen ersten Bypasskanal bzw. einen zweiten Bypasskanal umgehbar ist, wobei vorzugsweise im ersten Bypasskanal und/oder zweiten Bypasskanal ein erstes Bypass-Ventil bzw. zweites Bypass-Ventil angeordnet ist. Das erste bzw. zweite Bypass-Ventil kann als in Richtung des jeweiligen Hochdruckraumes öffnendes Rückschlagventil ausgebildet sein.

Eine weitere Ausführungsvariante der Erfindung sieht vor, dass die Steuereinrichtung samt Ventilkörper und Verbindungseinrichtung als Modul ausgebildet und in einem Gehäuse angeordnet ist, welches als Einheit in eine korrespondierende Ausnehmung im ersten oder zweiten Stangenteil einschiebbar ist. Je nach Ausführung bzw. Anordnung der Verschiebeachse des Verbindungselements kann die Einheit in Richtung der bzw. parallel zur Längsachse der Pleuelstange in die Ausnehmung eingeschoben werden. Dabei sind Gehäuse und Ausnehmung vorzugsweise im Wesentlichen zylindrisch ausgeführt. Eventuelle Ölzuführungen in das Innere des Moduls können durch umlaufende Nuten und zugehörige, in die Ausnehmung mündende Ölzuführungsöffnungen sichergestellt werden.

Diese und weitere Merkmale gehen außer aus den Ansprüchen und aus der Beschreibung auch aus den Zeichnungen hervor, wobei die einzelnen Merkmale jeweils für sich allein oder zu mehreren, in Form von Unterkombinationen bei einer Ausgestaltung der Erfindung verwirklicht sein können und eine vorteilhafte sowie für sich schutzfähige Ausführung darstellen können, für die ebenfalls Schutz beansprucht wird, sofern sie technisch sinnvoll ist.

Die Erfindung wird im Folgenden an Hand von nicht einschränkenden Ausführungsbeispielen, die in den Figuren dargestellt sind, näher erläutert. Darin zeigen
Fig. 1 eine erfindungsgemäße Pleuelstange in einem Längsschnitt,
Fig. 2a eine schematische Steuereinrichtung für eine erfindungsgemäße Pleuelstange in einer ersten Schaltstellung,
Fig. 2b diese schematische Steuereinrichtung in einer zweiten Schaltstellung,
Fig. 3 eine Steuereinrichtung für eine erfindungsgemäße Pleuelstange in einer ersten Ausführungsvariante,
Fig. 4 eine Steuereinrichtung für eine erfindungsgemäße Pleuelstange in einer zweiten Ausführungsvariante,
Fig. 5 eine Steuereinrichtung für eine erfindungsgemäße Pleuelstange in einer dritten Ausführungsvariante,
Fig. 6 eine Steuereinrichtung für eine erfindungsgemäße Pleuelstange in einer vierten Ausführungsvariante,
Fig. 7 eine Steuereinrichtung für eine erfindungsgemäße Pleuelstange in einer fünften Ausführungsvariante,
Fig. 8 die Steuereinrichtung aus Fig. 7 in einer Demontagestellung,
Fig. 9 eine Steuereinrichtung für eine erfindungsgemäße Pleuelstange in einer sechsten Ausführungsvariante,
Fig. 10 eine Steuereinrichtung für eine erfindungsgemäße Pleuelstange in einer siebenten Ausführungsvariante,
Fig. 11 eine schematische Darstellung einer Steuereinrichtung für eine erfindungsgemäße Pleuelstange in einer achten Ausführungsvariante und
Fig. 12 eine praktische Ausführung der in Fig. 11 schematisch dargestellten achten Ausführungsvariante,
Fig. 13 eine schematische Steuereinrichtung für eine erfindungsgemäßen Pleuelstange in einer neunten Ausführungsvariante,
Fig. 14 eine praktische Ausführung der in Fig. 13 schematisch dargestellten neunten Ausführungsvariante,
Fig. 15 diese Pleuelstange in einem Schnitt gemäß der Linien XV-XV in Fig. 14,
Fig. 16 diese Pleuelstange in einem Schnitt gemäß der Linien XVI-XVI in Fig. 14,
Fig. 17 und 18 die relativen Verschiebungen der Stangenteile und die Drücke in den Hochdruckräumen über dem Kurbelwinkel für verschiedene Motordrehzahlen.
Fig. 19 eine schematische Ansicht einer erfindungsgemäße Pleuelstange,
Fig. 20a eine erfindungsgemäße Pleuelstange in einer zehnten Ausführungsvariante in einem Längsschnitt gemäß der Linie I-I in Fig. 20b,
Fig. 20b einen ersten Stangenteil dieser Pleuelstange in einer Draufsicht samt Kontur des zweiten Stangenteils,
Fig. 21 einen ersten Stangenteil der Pleuelstange aus Fig. 20a samt Steuereinrichtung in einer Schrägansicht,
Fig. 22 einen ersten Stangenteil der Pleuelstange aus Fig. 20a samt Steuereinrichtung in einer weiteren Schrägansicht,
Fig. 23 eine erfindungsgemäße Pleuelstange in einer elften Ausführungsvariante in einem Längsschnitt entlang der Linie V-V in Fig. 24,
Fig. 24 einen ersten Stangenteil dieser Pleuelstange in einer Draufsicht samt Kontur des zweiten Stangenteils,
Fig. 25 einen ersten Stangenteil der Pleuelstange aus Fig. 23 samt Steuereinrichtung in einer Schräg- und teilweisen Schnittansicht,
Fig. 26 einen ersten Stangenteil der Pleuelstange aus Fig. 23 samt Steuereinrichtung in weiteren Schräg- und teilweisen Schnittansicht,
Fig. 27 das Detail IX aus Fig. 20a
Fig. 28 das Detail X aus Fig. 23,
Fig. 29 eine schematische Darstellung einer Steuereinrichtung für eine erfindungsgemäße Pleuelstange einer zwölften Ausführungsvariante in einer ersten Schaltstellung,
Fig. 30 eine schematische Darstellung der Steuereinrichtung aus Fig. 29 in einer zweiten Schaltstellung,
Fig. 31 eine schematische Darstellung einer Steuereinrichtung für eine erfindungsgemäße Pleuelstange in einer dreizehnten Ausführungsvariante in einer ersten Schaltstellung,
Fig. 32 eine schematische Darstellung der Steuereinrichtung aus Fig. 31 in einer zweiten Schaltstellung,
Fig. 33 schematisch den Bereich, von dem der Hydraulikmediumversorgungskanal gemäß einer Ausführungsvariante der ausgeht, in einem Schnitt durch den Kurbelzapfen einer Kurbelwelle,
Fig. 34 ein Druck am Verbindungselement/Kurbelwinkel-Diagramm einer längenverstellbaren Pleuelstange gemäß Stand der Technik und
Fig. 35 ein Druck ein Druck am Verbindungselement /Kurbelwinkel-Diagramm einer erfindungsgemäßen Pleuelstange.

Funktionsgleiche Teile sind in den in den Figuren dargestellten Ausführungsvarianten mit gleichen Bezugszeichen versehen.

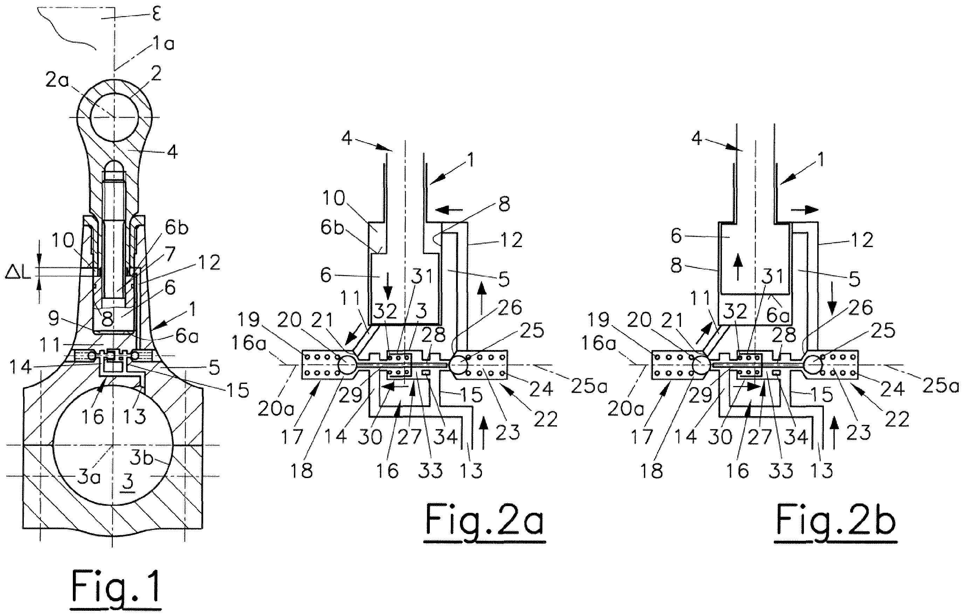

Fig. 1 zeigt eine zweigeteilte Pleuelstange 1 für eine Hubkolbenmaschine, beispielsweise eine Brennkraftmaschine, mit einem kleinen Pleuelauge 2 für ein nicht weiter dargestelltes Kolbenbolzenlager und einem großen Pleuelauge 3 für ein nicht weiter dargestelltes Kurbelzapfenlager einer Brennkraftmaschine. Die Drehsymmetrieachsen des kleinen bzw. großen Pleuelauges 2, 3 sind mit 2a bzw. 3a bezeichnet. Die Längsachse der Pleuelstange 1 ist mit 1a, eine auf die Drehsymmetrieachsen 2a und 3a des kleinen und großen Pleuelauges 2, 3 normal stehende und die Längsachse 1a der Pleuelstange 1 beinhaltende Längsmittelebene - die Schwingebene - der Pleuelstange 1 ist mit ε bezeichnet.

Die Pleuelstange 1 weist einen oberen ersten Stangenteil 4 mit dem kleinen Pleuelauge 2 und einen unteren zweiten Stangenteil 5 mit dem großen Pleuelauge 3 auf. Der erste Stangenteil 4 ist gegenüber dem zweiten Stangenteil 5 zwischen einer ausgezogenen Lage und einer in Fig. 1 dargestellten eingeschobenen Lage um einen Verstellbereich ΔL in Richtung der Längsachse 1a der Pleuelstange 1 verstellbar. Im oberen ersten Stangenteil 4 ist ein im Wesentlichen zylindrisches Kolbenelement 6 beispielsweise mit einer durch eine Innensechskantschraube gebildeten Befestigungsschraube 7 befestigt.

Das Kolbenelement 6 ist in einem Führungszylinder 8 des unteren zweiten Stangenteils 5 der Pleuelstange 1 axial verschiebbar geführt, wobei zwischen einer dem großen Pleuelauge 3 zugewandten ersten Stirnfläche 6a des Kolbenelementes 6 und dem zweiten Stangenteil 5 in zumindest einer Lage der beiden Stangenteile 4, 5 ein erster Hochdruckraum 9 aufgespannt wird. Das als Stufenkolben ausgebildete Kolbenelement 6 weist eine dem kleinen Pleuelauge 2 zugewandte zweite Stirnfläche 6b auf, welche an einen zweiten Hochdruckraum 10 grenzt, dessen zylindrische Mantelfläche vom Führungszylinder 8 des zweiten Stangenteils 5 gebildet wird. Unter einem Stufenkolben wird im Allgemeinen ein Kolben - im vorliegenden Fall ein "zweiseitig wirkender Kolben" - mit unterschiedlich großen Wirkflächen verstanden, wobei eine der Wirkflächen (hier: die gegen den zweiten Hochdruckraum 10 orientierte Wirkfläche) als Ringfläche und die andere Wirkfläche als Kreisfläche ausgebildet ist. Durch die unterschiedlichen Wirkflächen lassen sich die hier beschriebenen Druckverhältnisse realisieren.

Die ringförmigen ersten und zweite Stirnflächen 6a, 6b bilden Druckangriffsflächen für ein in die Hochdruckräume 9, 10 geleitetes und unter Druck stehendes Betätigungsmedium, beispielsweise Motoröl.

In den ersten Hochdruckraum 9 mündet ein erster Ölkanal 11 und in den zweiten Hochdruckraum 10 ein zweiter Ölkanal 12 ein.

Die Ölversorgung des ersten und zweiten Ölkanals 11, 12 erfolgt über den Ölversorgungskanal 13, welcher vom Pleuellager 3b des großen Pleuelauges 3 ausgeht und somit mit dem nicht weiter dargestellten Kurbelzapfenlager strömungsverbunden ist, sowie mit dem Ölversorgungskanal 13 verbundene Verbindungskanäle 14, 15.

Zur Steuerung der Drücke in den ersten und zweiten Hochdruckräumen 9, 10 ist eine Steuereinrichtung 16 in der Pleuelstange 1, und zwar im unteren zweiten Stangenteil 5, vorgesehen, welche im Strömungsweg zwischen dem ersten Verbindungskanal 14 und dem ersten Ölkanal 11 ein erstes Ventil 17 mit einem ersten Ventilraum 18 aufweist, in welchem ein durch eine erste Ventilfeder 19 vorgespannter erster Ventilkörper 20 gegen einen ersten Ventilsitz 21 gedrückt wird. In den ersten Ventilraum 18 mündet der erste Ölkanal 11 ein. Weiters weist die Steuereinrichtung 16 ein zweites Ventil 22 mit einem zweiten Ventilraum 23 auf, in welchem ein durch eine zweite Ventilfeder 24 vorgespannter zweiter Ventilkörper 25 gegen einen zweiten Ventilsitz 26 gedrückt wird, wobei der zweite Ölkanal 12 in den zweiten Ventilraum 23 einmündet. Weiters weist die Steuereinrichtung 16 eine Verbindungseinrichtung 27 zwischen dem ersten Ventil 17 und dem zweiten Ventil 22 mit zumindest einem Verbindungselement 28 auf, welches in den Ausführungsbeispielen durch eine normal zur Längsachse 1a, insbesondere in einer Längsmittelebene ε der Pleuelstange 1 angeordnete Verbindungsstange 29 gebildet ist. Das Verbindungselement 28 ist fest mit einem in einem Steuerzylinder 30 verschiebbaren Steuerkolben 31 verbunden. Der durch eine Rückstellfeder 32 federbelastete Steuerkolben 31 grenzt an einen Steuerraum 33, in den eine mit dem Ölversorgungskanal 13 bzw. dem Verbindungskanal 15 verbundene Steuerleitung 34 einmündet. Die Ventilkörper 20 bzw. 25 und die Verbindungseinrichtung 27 sind getrennte Bauteile. Dadurch ist die Verbindungseinrichtung 27 in zumindest einer in Fig. 2a gezeigten ersten Verschiebestellung des Verbindungselementes 28 vom zweiten Ventilkörper 25 und in einer in Fig. 2b gezeigten zweiten Verschiebestellung vom ersten Ventilkörper 20 beabstandet.

Die ersten und zweiten Ventilkörper 20, 25 der ersten und zweiten Ventile 17, 22 werden bevorzugt durch Kugeln gebildet.

Durch die Ventilkörper 20, 25 der ersten und zweiten Ventile 17, 22 werden die Strömungsverbindungen zwischen dem ersten Zuführkanal 14 und dem ersten Ölkanal 11 bzw. zwischen dem zweiten Zuführkanal 15 und dem zweiten Ölkanal 12 geöffnet oder verschlossen. Der beispielsweise aus Kunststoff bestehende Steuerkolben 31 wird vom Öldruck der Brennkraftmaschine betätigt.

Wenn der Öldruck - beispielsweise bei Leichtlast - unter einem definierten Ansprechdruck (von zum Beispiel 1,8 bar) gehalten wird, bleibt der Steuerkolben 31 in seiner in Fig. 2b dargestellten zweiten Stellung stehen, weil die Federkraft der Rückstellfeder 32 größer ist als die Kraft auf die Stirnfläche des Steuerkolbens 31 zu Folge des Öldruckes in der Steuerleitung 34. In diesem Fall hält die Verbindungsstange 29, die mit dem Steuerkolben 31 fest - beispielsweise durch einen Presssitz - verbunden ist, den Ventilkörper 25 für die Verbindung zum zweiten Hochdruckraum 10 über den zweiten Ölkanal 12 geöffnet, während der erste Ventilkörper 20 des ersten Ventils 17 für die Verbindung zum ersten Hochdruckraum 9 durch die erste Ventilfeder 19 geschlossen bleibt.

Während der Hubbewegung wirkt im Bereich des oberen Totpunktes des nicht weiter dargestellten Kolbens eine Massenkraft auf die Pleuelstange 1, welche den ersten Stangenteil samt Kolben 6 - in Fig. 1, 2a und 2b betrachtet - und damit das kleine Auge nach oben zieht. Dabei wird Öl über das eigentlich geschlossene erste Ventil 21 angesaugt, indem der erste Ventilkörper 20 durch die im ersten Hochdruckraum 9 entstehende Sogwirkung entgegen der Rückstellkraft der ersten Ventilfeder 19 angehoben wird; der untere erste Hochdruckraum 9 füllt sich dabei über den ersten Ölkanal 11 mit Öl, während Öl aus dem oberen zweiten Hochdruckraum 10 in den zweiten Ölkanal 12 gepresst wird. Die Pleuelstange 1 wird dadurch länger. Der Ölfluss in den Ölkanälen 11, 12 ist durch Pfeile in Fig. 2b dargestellt.

Wenn der Öldruck bei höherer Motorlast auf ein höheres Level steigt, wird die Rückstellfeder 32 des Steuerkolbens 31 komprimiert, wobei sich der Steuerkolben 31 bis zu einem linken Anschlag des Steuerzylinders 30 bewegt.

In dieser Stellung drückt die Verbindungsstange 29 den ersten Ventilkörper 20 des ersten Ventils 17 auf, welches den unteren ersten Hochdruckraum 9 mit dem Ölversorgungskanal 13 verbindet. Dadurch kann das Öl aus dem ersten Hochdruckraum 9 in den Ölversorgungskanal 13 und somit weiter ins Ölversorgungssystem zurückfließen. Da die Verbindungsstange 29 vom zweiten Ventilkörper 25 abgehoben ist und somit der zweite Ventilkörper durch die Rückstellkraft der zweiten Ventilfeder 24 auf den zweiten Ventilsitz 26 gepresst ist, ist das zweite Ventil 22 geschlossen; bei jeder Zündung wird der Kolben 6 heruntergedrückt und Öl in den zweiten Hochdruckraum 10 durch die Sogwirkung im zweiten Hochdruckraum 10 über das eigentlich geschlossene zweite Ventil 22 durch den entgegen der Kraft der zweiten Ventilfeder 24 abhebenden zweiten Ventilkörper 25 angesaugt bis der zweite Hochdruckraum 10 mit Öl gefüllt ist. Die Strömung des Öls ist durch Pfeile in Fig. 2a angedeutet. In dieser Position ist die Pleuelstange 1 kürzer.

Wenn der Öldruck im Ölsystem wieder gesenkt wird, expandiert die Rückstellfeder 32 des Steuerkolbens 31 (Fig. 2b) und der Steuerkolben 31 rückt - Fig. 2b betrachtet - nach rechts, wobei das zweite Ventil 22 für den zweiten Hochdruckraum 10 geöffnet und das erste Ventil 17 für den ersten Hochdruckraum 9 geschlossen wird. Der erste Hochdruckraum 9 pumpt sich wieder in der beschriebenen Weise durch die auf den zweiten Stangenteil und das Kolbenelement 6 im oberen Totpunkt des Kolbens wirkenden Massenkräfte auf und die Pleuelstange 1 wird wieder länger.

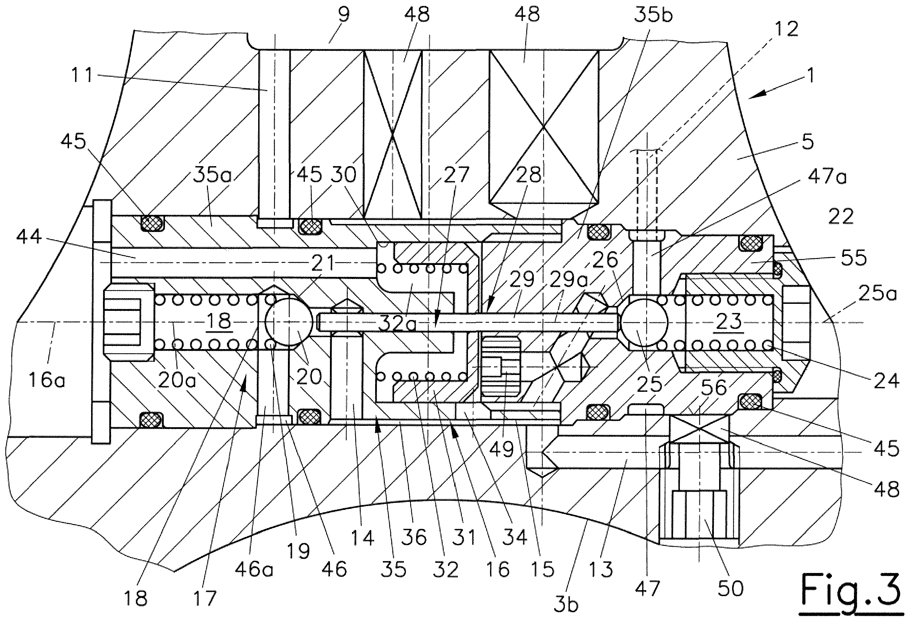

Im Folgenden werden verschiedene Ausführungsvarianten der Steuereinrichtung 16 an Hand der Fig. 3 bis 9 erläutert.

Fig. 3 zeigt eine den schematischen Darstellungen aus Fig. 2a und 2b entsprechende erste Ausführungsvariante, bei der die erste Hubachse 20a des ersten Ventilkörpers 20 des ersten Ventils 17 und die zweite Hubachse 25a des zweiten Ventilkörpers 25 des zweiten Ventils 22 koaxial zur Längsachse 29a der Verbindungsstange 29 angeordnet sind.

Die Steuereinrichtung 16 weist ein in den zweiten Pleuelstangenteil 5 eingesetztes und fixiertes Gehäuse 35 auf. Das Gehäuse 35 weist einen Führungsteil 35a für die Verbindungsstange 29 im Bereich des ersten Ventils 17 und einen Führungsteil 35b für die Verbindungsstange 29 im Bereich des zweiten Ventils 22 auf, wobei in der in Fig. 3 gezeigten Ausführung das erste Ventil 17 im Führungsteil 35a und das zweite Ventil 22 in einem Führungsteil 35b angeordnet ist. Der Führungsteil 35b wird bei den in den Fig. 3, 4, 5, 6, 10, 12 und 14 gezeigten Ausführungen durch das Ventilgehäuse 55 des zweiten Ventils 22 gebildet, welches Ventilgehäuse 55 seitlich in eine Aufnahmebohrung 56 des zweiten Stangenteils 5 eingeschoben und fixiert wird. Die Verschiebestange 29 bzw. Verbindungsstange 29 ist in den beiden Führungsteilen 35a, 35b verschiebbar gelagert. Der den Steuerkolben 31 aufnehmende Steuerzylinder 30 wird durch den Führungsteil 35a gebildet. Im Bereich des ersten Ölkanals 11 weist der Führungsteil 35a zur Versorgung des ersten Hochdruckraumes 9 mit Öl einen mit dem ersten Ventilraum 18 über eine radiale Bohrung strömungsverbundenen Ringraum 46 auf. Analog dazu ist auch in dem Führungsteil 35b im Bereich des zweiten Ölkanals 12 ein umlaufender Ringraum 47 eingearbeitet, welcher über eine radiale Bohrung mit dem zweiten Ventilraum 23 strömungsverbunden ist.

Im in Fig. 3 dargestellten Beispiel sind der erste Verbindungskanal 14 und die Steuerleitung 34 im Führungsteil 35a, und der zweite Verbindungskanal 15 im Führungsteil 35b angeordnet.

Ein zwischen dem Führungsteil 35a und dem ersten Stangenteil 4 ausgebildeter Ringspalt 36 dient dazu, den im ersten Stangenteil 4 angeordneten Ölversorgungskanal 13 mit dem ersten Verbindungskanal 14 und der zum Steuerraum 33 führenden Steuerleitung 34 zu verbinden. Gegebenenfalls kann zwischen dem zweiten Verbindungskanal 15 und dem Steuerraum 33 eine Drossel 49 angeordnet sein. Weiters kann eine Drossel 50 im vom Pleuellager 3b ausgehenden Ölversorgungskanal 13 angeordnet sein.

Das aus den beiden Führungsteilen 35a, 35b bestehende Gehäuse 35 mit den integrierten Verbindungskanälen 14, 15 und der integrierten Steuerleitung 34 hat den Vorteil, dass zur Integration einer Steuereinrichtung einer erfindungsgemäßen Pleuelstange in den ersten Stangenteil 4 einer für einen Steuerschieber ausgelegten bekannten Pleuelstange keine oder nur wenige Adaptionen durchgeführt werden müssen, so dass der Fertigungsaufwand, insbesondere der Änderungsaufwand in der Fertigung, sehr klein gehalten werden kann.

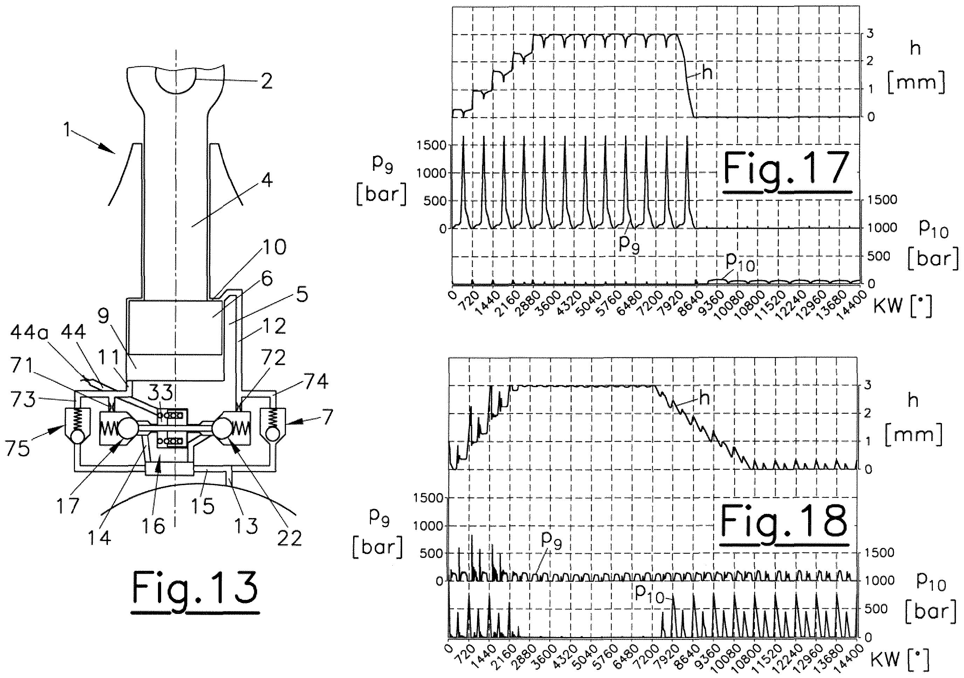

Mit Bezugszeichen 44 ist eine Entlüftungsleitung zur Ent- bzw. Belüftung des Steuerraumes 33 sowie zur Abfuhr von Leckageöl bezeichnet. Die Entlüftungsleitung 44 kann eine Drosselstelle 44a aufweisen (Fig. 13). Unter hohem Druck stehende Bereiche des Gehäuses 35 sind über O-Ringdichtungen 45 abgedichtet. Mit Verschlussstopfen 48 sind fertigungstechnisch notwendige Bohrungen verschlossen.

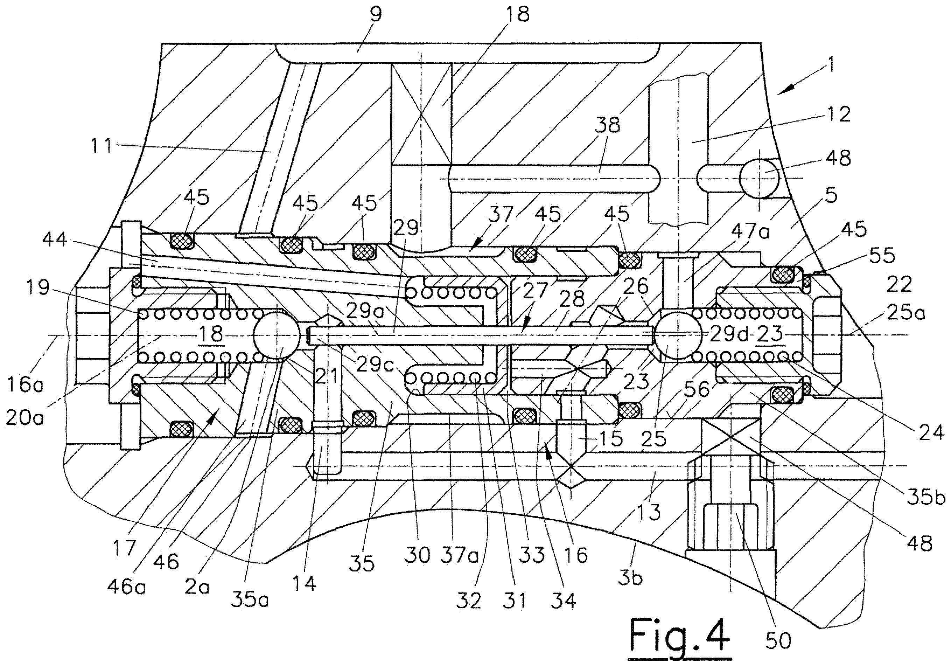

Fig. 4 zeigt eine alternative zweite Ausführung der Steuereinrichtung 16, welche sich im Wesentlichen durch eine Klemmfunktion für den Steuerkolben 31 von Fig. 3 unterscheidet.

Um zu verhindern, dass beim Öffnen des zweiten Ventils 22 für den zweiten Hochdruckraum 10 die Druckwelle den Steuerkolben 31 in Fig. 2b gesehen nach links drückt und dadurch das andere erste Ventil 17, das den unteren ersten Hochdruckraum 9 abdichtet, wieder geöffnet wird, ist das den Steuerzylinder 30 aufnehmende Gehäuse 35 der Steuereinrichtung 16 so gestaltet, dass im Bereich des Steuerkolbens 31 die Druckwelle die Gehäusewand des Steuerzylinders 30 elastisch einschnürt. Der Führungsteil 35a des Gehäuses 35 weist dazu eine Einschnürung der Gehäusewand im Bereich des Steuerzylinders 30 bildende Ringnut 37a auf, deren Ringraum 37 mit dem zweiten Ölkanal 12 über einen Zwischenkanal 38 verbunden ist. Die Wandstärke in diesem eingeschnürten Bereich wird dabei so gewählt, dass die Verformung der den Steuerzylinder 30 umgebenden Gehäusewand zu Folge des im Ringraum 37 der Ringnut 37a anliegenden Druckes beim Auftreten einer Druckwelle ausreichend groß wird, um den Steuerkolben 31 zu klemmen. Immer dann, wenn Hochdruck im zweiten Hochdruckraum 10 herrscht, wird das Gehäuse 35 so verformt, dass der Steuerkolben 31 geklemmt und ein Verschieben dieses durch auftretende Druckwellen wirksam verhindert wird. Wenn der Steuerkolben 31 durch die Verformung des Gehäuses 35 geklemmt wird, kann somit das erste Ventil 17 durch den Steuerkolben 31 nicht geöffnet werden.

Die Steuerbewegung kann daher immer nur in den drucklosen Phasen erfolgen, d.h. bezogen auf das beschriebene Ausführungsbeispiel in Phasen, in denen insbesondere das zweite Ventil 22, welches über den zweiten Hydraulikkanal 12 mit dem zweiten Hochdruckraum 10 strömungsverbunden ist, nicht geöffnet ist, vorzugsweise in Phasen, in denen keines der Ventile geöffnet ist.

Weiters sind in Fig. 4 die Verbindungskanäle 14, 15 teilweise im ersten Stangenteil 4 und teilweise im Gehäuse 35 angeordnet.

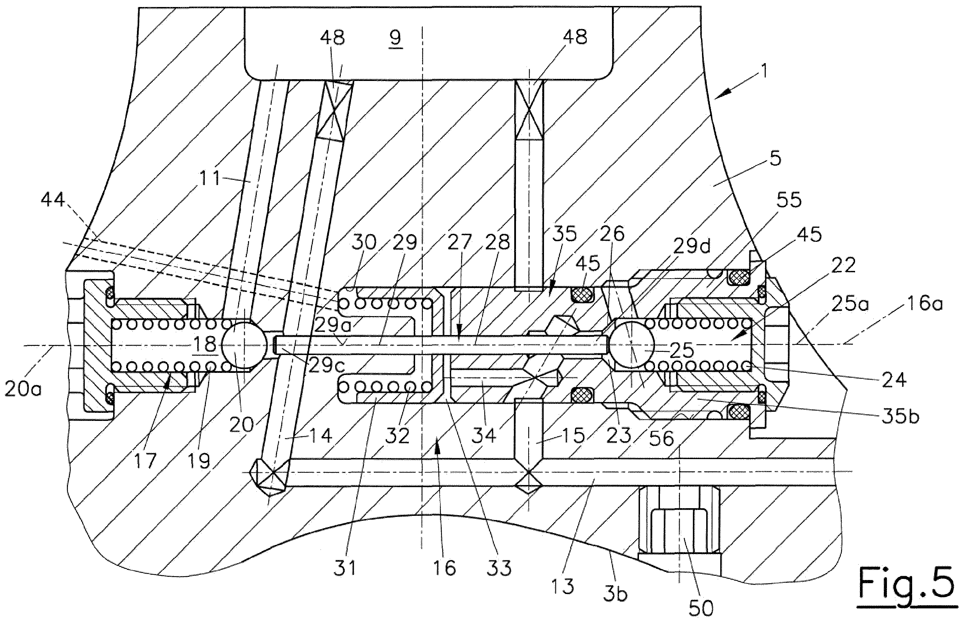

Fig. 5 zeigt eine dritte Variante, bei der der erste Ventilraum und der Steuerzylinder direkt vom ersten Stangenteil 4 gebildet sind.

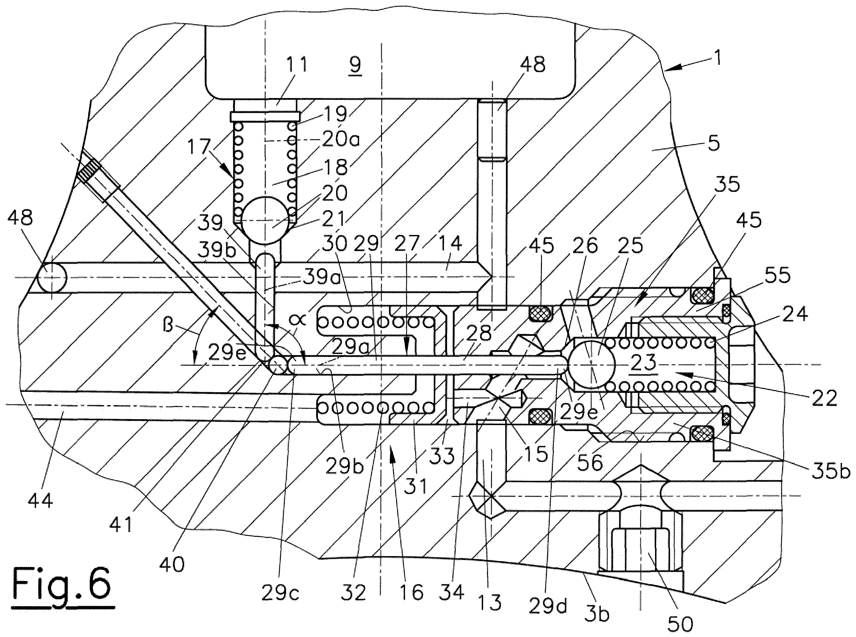

In Fig. 6 ist eine vierte Variante gezeigt, bei der die erste Hubachse 20a des ersten Ventilkörpers 20 unter einem ersten Winkel α von etwa 90° +/- 60° zur Längsachse 29a der Verbindungsstange 29 geneigt angeordnet ist. Konkret ist im Ausführungsbeispiel die erste Hubachse 20a normal auf die Längsachse 29a der Verbindungsstange 29, die zweite Hubachse 25a des zweiten Ventilkörpers 25 aber koaxial zur Längsachse 29a der Verbindungsstange 29 angeordnet. Zwischen dem ersten Ventilkörper 20 und der Verbindungsstange 29 ist zumindest ein axial verschiebbares, im Wesentlichen stangenförmige erste Übertragungselement 39 angeordnet, wobei vorzugsweise die Längsachse 39a des Übertragungselements 39 achsgleich zur ersten Hubachse 20a des ersten Ventilkörpers 20 angeordnet ist.

Zur Umlenkung der Bewegung der Verbindungsstange 29 auf den ersten Ventilkörper 20 bzw. das erste Übertragungselement 39 ist ein kugelförmiges Umlenkelement 40 in einer Umlenkbohrung 41 angeordnet, welche die Aufnahmebohrung 29b der Verbindungsstange 29 und die Aufnahmebohrung 39b des Übertragungselementes 39 verbindet. Die erste Umlenkbohrung 41 ist unter einem Winkel β > 0°, beispielsweise 45°, zur Längsachse 29a der Verbindungsstange 29 und zur ersten Hubachse 20a des ersten Ventilkörpers 20 geneigt angeordnet. Die Verbindungsstange 29 wirkt somit indirekt, also über das Umlenkelement 39, auf das Übertragungselement 39 ein. Die Verbindungsstange 29 und/oder das Umlenkelement 40 können aus einem Keramikwerkstoff bestehen, was eine hohe Festigkeit und eine geringe thermische Ausdehnung gewährleistet.

Dadurch, dass die erste Hubachse 20a geneigt zur Längsachse der Verbindungsstange 29 und parallel zur Längsachse 1a der Pleuelstange angeordnet ist, kann ein Abheben des ersten Ventilkörpers 20 durch Massenkräfte in Folge von Verzögerungs- und Beschleunigungsbewegungen der Pleuelstange im Bereich des großen Pleuelauges während der Kurbelbewegung verhindert werden. Das zweite Ventil 22 ist gegen Abhebebewegungen weniger gefährdet, da im Bereich der Maxima der Massenkräfte höhere Schließkräfte als Summe der Öldruckes im zweiten Hochdruckraum 10 und der Rückstellkraft der zweiten Ventilfeder 24 auf den zweiten Ventilkörper 25 einwirken. Somit können Umdrehungen bis zu etwa 4000 U/min ohne massenkraftbedingtes Abheben der Ventilkörper 20, 25 gefahren werden.

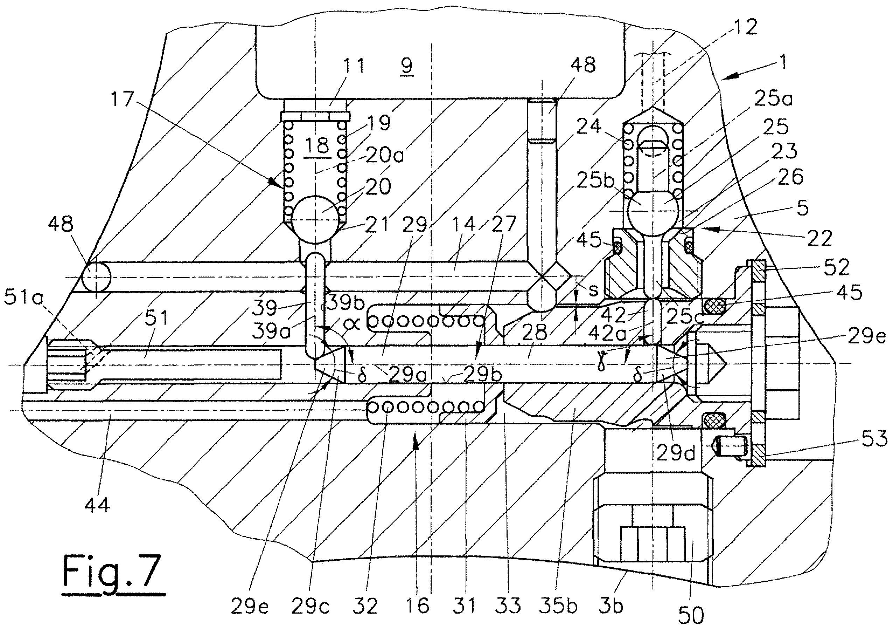

Fig. 7 zeigt eine fünfte Ausführungsvariante, bei der auch das zweite Ventil 22 geneigt zur Verbindungsstange 29 angeordnet ist. Im Detail ist die zweite Hubachse 25a des zweiten Ventilkörpers 25 unter einem ersten Winkel γ von etwa 90° +/- 60° zur Längsachse 29a der Verbindungsstange 29 geneigt angeordnet. Im in Fig. 7 dargestellten Ausführungsbeispiel sind konkret sowohl die erste Hubachse 20a des ersten Ventilkörpers 20, als auch die zweite Hubachse 25a des zweiten Ventilkörpers 25 normal auf die Längsachse 29a der Verbindungsstange 29 angeordnet. Zwischen dem ersten Ventilkörper 20 und der Verbindungsstange 29 ist ein axial verschiebbares, im Wesentlichen stangenförmiges, erstes Übertragungselement 39 und zwischen dem zweiten Ventilkörper 25 und der Verbindungsstange 29 ein axial verschiebbares, beispielsweise stangenförmiges, zweites Übertragungselement 42 angeordnet. Die erste Verschiebeachse 39a des ersten Übertragungselement 39 ist achsgleich zur ersten Hubachse 20a und die zweite Verschiebeachse 42a des zweiten Übertragungselementes 42 achsgleich zur zweiten Hubachse 25a angeordnet.

Abweichend von der Fig.6 wirkt die Verbindungsstange 29 bei der In Fig. 7 dargestellten Ausführung direkt auf das erste bzw. zweite Übertragungselement 39, 42 ein. Die Enden 29c und 29d der Verbindungsstange sind kegelig oder keilförmig geformt, wobei der Öffnungswinkel δ der Mantelflächen 29e des kegeligen oder keilförmigen Endes 29c, 29d beispielsweise 30° beträgt. Bei Verschieben der Verbindungsstange wird durch die geneigten Mantelflächen 29e das erste bzw. zweite Übertragungselement 39, 42 und somit der entsprechende erste bzw. zweite Ventilkörper 20, 25 entgegen der Rückstellkraft der ersten bzw. zweiten Ventilfeder 19, 24 in Richtung der ersten bzw. zweiten Hubachse 20a, 25a ausgelenkt. Ein separates Umlenkelement und eine Umlenkbohrung zur Aufnahme dieses ist hier also nicht erforderlich. Um den nötigen Hubweg der Ventilkörper 20, 25 zu erreichen, sollte die Dicke der Verbindungsstange 29 mindestens dem doppelten Hubweg der Ventilkörper 20, 25 entsprechen.

Der Führungsteil 35b dient zur Führung der Verbindungsstange 29 und des zweiten Übertragungselementes 42. Zwischen dem Führungsteil 35b und dem ersten Stangenteil ist ein beispielsweise ringförmiger Spalt s (von beispielsweise 0,05 mm) ausgebildet, welcher einerseits zur Versorgung des Steuerraumes 33 und der beiden Ventile 17, 22 mit Öl, und andererseits als Drossel fungiert, um zu verhindern, dass eine beim Öffnen des zweiten Ventils 22 auftretende Druckwelle in das System gelangt. Der Führungsteil 35b wird beispielsweise mittels eines Innensicherungsringes 52 am ersten Stangenteil 4 fixiert und mittels eines Passstiftes 53 lagerichtig gehalten und gegen Verdrehen gesichert.

Der zweite Ventilkörper 25 des zweiten Ventiles 22 ist als länglicher Rotationsteil ausgebildet und weist auf der Seite des zweiten Ventilsitzes 26 unterhalb eines sphärischen Bereiches 25b einen zapfenartigen Fortsatz 25c auf, der das zweite Übertragungselement 42 kontaktiert.

Mit Bezugszeichen 51 ist ein Anschlagelement für die Verbindungsstange 29 bezeichnet, welches eine Belüftungsöffnung 51a aufweist, um eine Belüftung sowie eine Leckage in das nicht weiter dargestellte Kurbelgehäuse zu ermöglichen. Das Anschlagelement 51 verhindert, dass die Verbindungsstange 29 im Bereich des zweiten Endes 29d und das zweite Übertragungselement 42 bei der Regelung außer Eingriff kommen, bzw. dass das Übertragungselement 42 in die Aufnahmebohrung 29b der Verschiebestange 29 fällt.

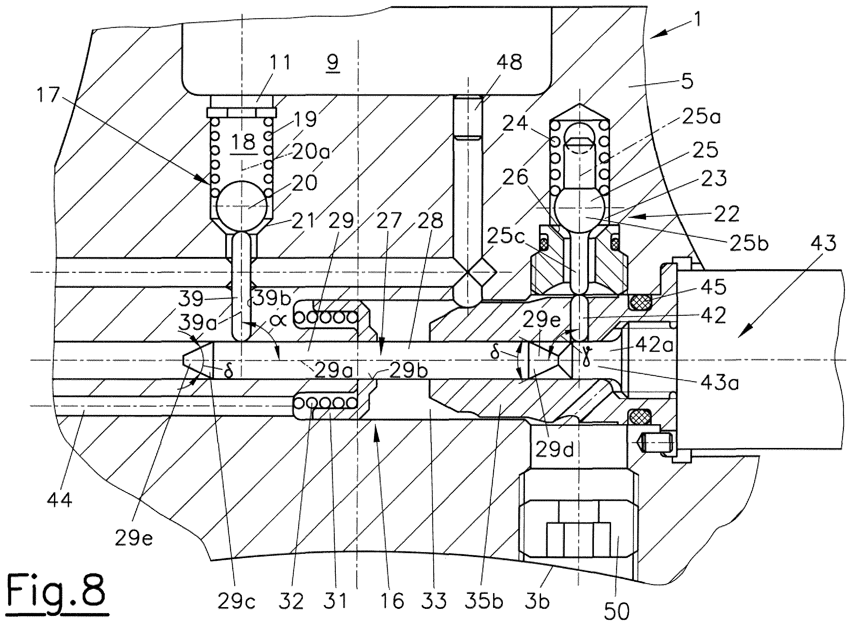

Wie in Fig. 8 gezeigt ist, kann zur Demontage der Steuerungseinrichtung 16 ein geeignetes Werkzeug 43 stirnseitig in das Gehäuse 35 eingeschraubt werden, so dass die Verbindungsstange 29 entgegen der Rückstellkraft der Rückstellfeder 32 in der Fig. 8 nach links geschoben werden kann, bis die Verbindungsstange 28 und ein Zapfen 43a des Werkzeuges 43 die Übertragungselemente 39, 42 zur Gänze radial aus der Aufnahmebohrung 29b der Verbindungsstange 29 schieben. Der Zapfen 43a hält das zweite Übertragungselement 42 in der ausgeschobenen Position und verhindert, dass die zweite Ventilfeder 24 das zweite Übertragungselement 42 in den Führungsteil 35b drückt, was dessen Demontage behindern würde. Nach einschrauben des Werkzeuges 43 kann somit das Gehäuse 35 mit dem Werkzeug 43 aus dem ersten Stangenteil 4 herausgezogen werden.

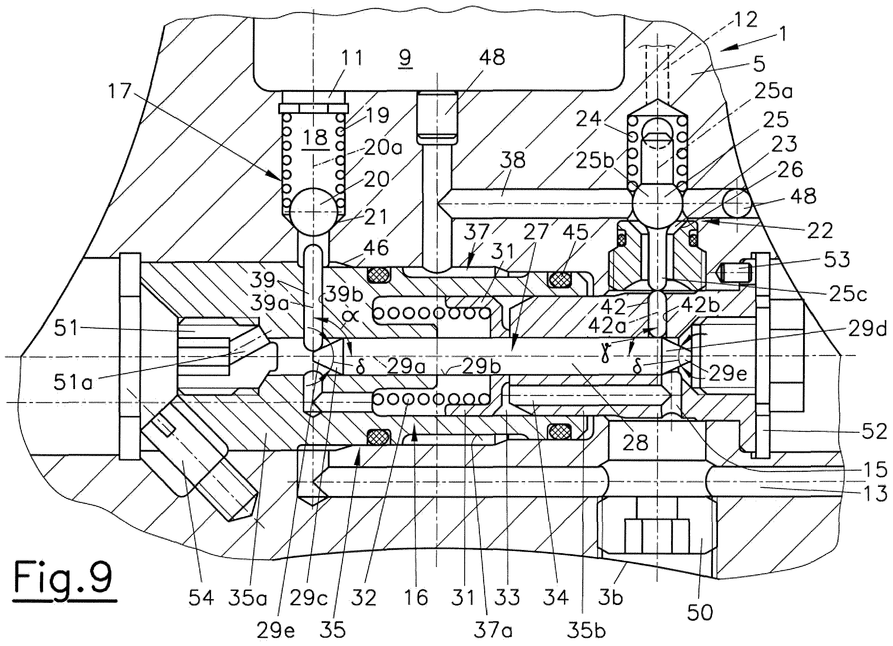

Bei der in Fig. 9 dargestellten sechsten Ausführungsvariante sind - wie in Fig. 7 bzw. 8 - die Hubachsen 20a, 25a der ersten und zweiten Ventilkörper 20, 25 geneigt zur Längsachse 29a der Verbindungsstange 29 angeordnet. Diese sechste Ausführung unterscheidet sich aber von der fünften Ausführung dadurch, dass - wie in Fig. 4 - eine Klemmfunktion für den Steuerkolben 31 vorgesehen ist. Dazu ist auch hier im Bereich des ersten Ventils 17 ein Führungsteil 35a des Gehäuses 35 vorgesehen, welcher den Steuerzylinder 30 zur Aufnahme des Steuerkolbens 31 ausbildet. Im Bereich des Steuerzylinders 30 ist am äußeren Umfang eine einen Ringraum 37 bildende Ringnut 37a eingeformt, wobei dieser Ringraum 37 über einen oder mehrere Verbindungskanäle 38 mit dem zweiten Ölkanal 12 und weiter mit dem zweiten Hochdruckraum 10 strömungsverbunden ist. Immer dann, wenn Hochdruck im zweiten Hochdruckraum 10 herrscht, wird der Führungsteil 35a des Gehäuses 35 im Bereich des Steuerzylinders 30 so verformt, dass der Steuerkolben 31 geklemmt und ein Verschieben dieses durch auftretende Druckwellen wirksam verhindert wird. Mit Bezugszeichen 54 ist ein Arretierelement zum lagegenauen Fixieren des Führungsteils 35b bezeichnet.

Die Steuereinrichtung 16 weist eine Anzahl an in Richtung der Verschiebeachse 16a der Steuereinrichtung 16 hin- und hergehender Teile, wie Steuerkolben 31, Verbindungsstange 29 und Ventilkörper 20, 25 auf. Die Verschiebeachse 16a der Steuereinrichtung 16 ist in der Schwingebene ε und etwa normal auf die Längsachse 1a der Pleuelstange 1 angeordnet.

Während der Drehung der Kurbelwelle wirken Beschleunigungskräfte auf hin- und hergehenden Teile der Steuereinrichtung 16, insbesondere auf den Steuerkolben 31 entgegen der Kraft der Rückstellfeder 32 ein. Ab einer gewissen Drehzahl werden die auf den Steuerkolben 31 einwirkenden Massenträgheitskräfte so groß, dass schließlich die Kraft der Rückstellfeder 32 überschritten wird und der Steuerkolben 31 alleine durch die Beschleunigungskräfte entgegen der Rückstellkraft verschoben werden würde, was zu einer Fehlfunktion der Steuereinrichtung 16 führen und damit den Drehzahlbereich für die Verstellung der Pleuelstange 1 einschränken würde.

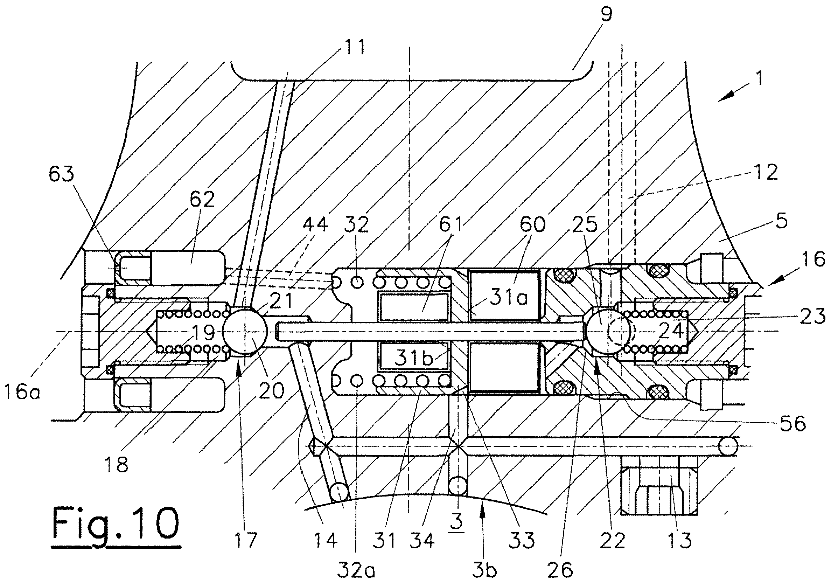

Um dies zu vermeiden, kann zumindest ein hin- und hergehender Teil der Steuereinrichtung 16 zumindest einen Auftriebskörper 60 aufweisen oder zumindest teilweise als Auftriebskörper ausgebildet sein. Der Auftriebskörper 60 kann als Hohlkörper oder als geschlossenporiger Schaumkörper ausgebildet sein. Die in Fig. 10 dargestellte Steuereinrichtung 16 unterscheidet sich von der in Fig. 5 dargestellten Steuereinrichtung dadurch, dass zumindest ein hin- und hergehender Teil der Steuereinrichtung 16 mit Auftriebskörpern 60, 61 versehen ist.

Wie in Fig. 10 gezeigt ist, kann dabei zumindest ein Auftriebskörper 60 im Bereich der ersten Stirnseite 31a angeordnet sein. Weiters kann auch im Bereich der zweiten Stirnseite 31b des Steuerkolbens 31 ein Auftriebskörper 61 angeordnet sein. Damit der Auftriebskörper 61 im Öl schwimmt, sind zwischen dem Steuerraum 33 und dem die Rückstellfeder 32 enthaltenden Federraum 32a definierte Leckagen vorgesehen. D.h., die Steuereinrichtung 16 ist derart ausgestaltet, dass zwischen dem Steuerraum 33 und dem Federraum 32 infolge der anliegenden Drücke Öl bzw. Hydraulikmedium übertreten kann, insbesondere durch kleine Schlitze und Spalte, die sich aufgrund von entsprechend gezielt gewählten Toleranzen bzw. Passungen zwischen den einzelnen Komponenten einstellen, wobei die Toleranzen bzw. Passungen derart gewählt sind, dass sich die definierten Leckagen einstellen. Insbesondere sind dazu die Toleranzen von Steuerzylinder 30 und Steuerkolben 31 so gewählt bzw. ist die Passung zwischen diesen so gewählt, dass eine definierte Leckage entsteht und Hydraulikmedium vom Steuerraum 33 in den Federraum 32 übertreten kann.

Weiters können die Verbindungsstange 29 und/oder die Ventilkörper 20, 25 als Auftriebskörper, beispielsweise als Hohlkörper, ausgeführt sein.

Wie aus Fig. 10 weiters ersichtlich ist, ist der Federraum 32a über die Entlüftungsleitung 44 mit einem Speicherraum 62 verbunden, welcher über eine Drossel 63 mit dem Kurbelraum des nicht weiter dargestellten Kurbelgehäuse verbunden ist. Dies ermöglicht einen Ölrücklauf in den Kurbelgehäuseraum. Somit ist der Federraum 32a des Steuerkolbens 31 stets mit dem Öl gefüllt, da durch die hin- und hergehenden Bewegungen des Steuerkolbens 31 immer genügend Öl aus dem Speicherraum 32 und/oder durch die Leckagen nachgesaugt werden kann. Die Drossel 63 ermöglicht dabei eine Dämpfung der Bewegung des Steuerkolbens 16, wodurch ein Öffnen des ersten Ventils 17 und somit des ersten Hochdruckraumes 9 durch eine Auslenkung des Steuerkolbens 16 und der Verschiebestange 29 zu Folge von aus dem zweiten Hochdruckraum 10 rücklaufenden Druckwellen vermieden werden kann.

Durch das geringe Spiel zwischen Steuerkolben 31 und Steuerzylinder 30 treten geringe - beabsichtigte - Leckagen zwischen dem Steuerraum 33 und dem Federraum 32a auf, wodurch die Auftriebskörper 60, 61 stets von Öl weitgehend umgeben sind und schwimmen. Dadurch kommt das bekannte archimedische Prinzip, dass der statische Auftrieb eines Körpers in einem Medium genauso groß ist wie die Gewichtskraft des vom Körper verdrängten Mediums, zur Anwendung. Die Querbeschleunigungskraft, die ein Abheben des Steuerkolbens 31 bzw. der Rückstellfeder 32 bewirken würde, wird somit wesentlich vermindert, sodass Fehlfunktionen der Steuereinrichtung 16 vermieden werden können.

Alle beschriebenen Ausführungsbeispiele ermöglichen durch den Einsatz der Auftriebskörper 60, 61 die Dichte des Gesamtsystems und die Massen, auf welche Querbeschleunigungen zu Folge der Kurbelwellenumdrehung wirken, wesentlich zu reduzieren. Somit lassen sich durch den Einsatz der Auftriebskörper 60, 61- auch ohne die in den Fig. 6 bis 8 vorgesehene Kraftumlenkung der Verbindungseinrichtung 27 - Motordrehzahlen weit über 7000 U/min realisieren, ohne dass die Funktion der längenverstellbaren Pleuelstange 1 eingeschränkt werden muss.

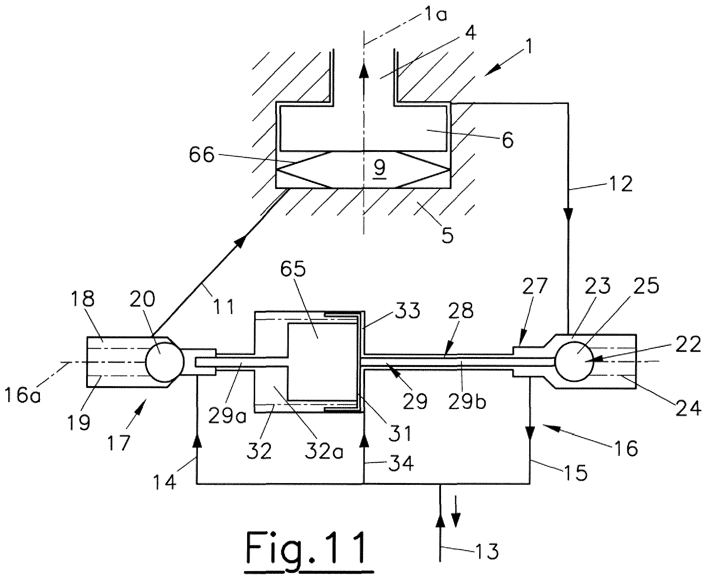

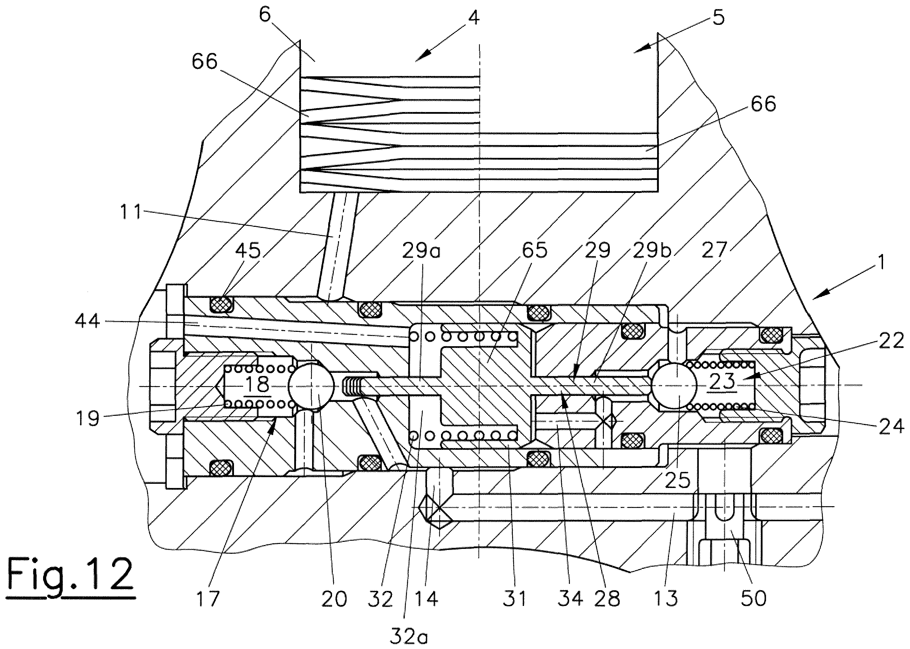

Bei Kaltstart besteht der Wunsch nach einer hohen Verdichtung. Allerdings herrscht im kalten Zustand der Brennkraftmaschine ein hoher Öldruck im Schmierölkreislauf, wodurch die Pleuelstange 1 verkürzt werden würde, was dem Wunsch nach einer hohen Verdichtung entgegensteht. Die Fig. 11 und 12 zeigen eine Lösung, um dieses Problem zu vermeiden, indem die Verbindungseinrichtung 27 und/oder der Steuerkolben 31 zumindest ein Thermoelement 65 aufweist, welches die Wirklänge der Verbindungseinrichtung 27 in Abhängigkeit der Betriebstemperatur verändert.

Das Verbindungselement 28 der Verbindungseinrichtung 27 ist dabei als eine normal zur Längsachse 1a der Pleuelstange 1 angeordnete, axial verschiebbare zweiteilige Verbindungstange 29 ausgebildet ist, welche im Bereich des Steuerkolbens 31 axial geteilt ist, wobei das Thermoelement 65 zwischen einem ersten Verbindungsstangenteil 29a und einem zweiten Verbindungsstangenteil 29b, insbesondere zwischen dem ersten Verbindungsstangenteil 29a und dem Steuerkolben 31 angeordnet ist.

Das Thermoelement 65 hat im kalten Zustand eine kürzere Einbaulänge als im warmen Zustand. Derartige Thermoelemente weisen ein temperatursensibles Dehnstoffelement mit beispielsweise Öl, Wachs, Hartparaffin oder Metall als Dehnstoff auf.

Im kalten Zustand kompensiert das Thermoelement 65 den hohen Steuerdruck im kalten Schmierölkreislauf, weshalb eine Verkürzung der Pleuelstange 1 und somit Absenkung der Verdichtung bei Kaltstart vermieden wird. Durch den zusammengezogenen Dehnstoff des Thermoelementes 65 ist die Länge des Verbindungselementes 28 verkürzt, weshalb ein Öffnen des ersten Ventils 17 unterbleibt und der Druck im ersten Hochdruckraum 9 erhalten bleibt. Bei Erreichen der Betriebstemperatur dehnt sich der Dehnstoff im Thermoelement 65 aus, wodurch das Verbindungselement 28 die zur Betätigung des ersten Ventils 17 notwendige normale Länge erreicht. Die gewünschten Verdichtungswerte können nun gemäß der Steuerung durch das Motorkennfeld eingestellt werden. Beispielsweise wird für den Niedriglastbereich hohe Verdichtung und für den Hochlastbereich niedrige Verdichtung eingestellt.

Die Brennkraftmaschine wird üblicherweise unmittelbar vor dem Abstellen in der Teillast und mit hoher Verdichtung betrieben. Wenn der Motor abgestellt wird, hat sich die für den Kaltstart gewünschte hohe Verdichtung eingestellt.

Um zu vermeiden, dass nach längerer Ruhezeit das Öl aus dem ersten Hochdruckraum 9 durch das Kolbengewicht ausgepresst wird, kann zwischen dem ersten und dem zweiten Stangenteil 4, 5 der Pleuelstange 1 ein in Richtung Pleuelstangenverlängerung wirkendes Federelement 66 angeordnet sein, welches beispielsweise als Tellerfeder ausgebildet sein kann. Durch das Federelement 66 wird der zweite Stangenteil 5 der Pleuelstange 1 in seiner oberen Position gehalten.

Fig. 12 zeigt eine der Fig. 4 ähnliche praktische Ausführung der in Fig. 11 schematisch dargestellten Anordnung mit einem Thermoelement 65 in der geteilten Verbindungsstange 29 zwischen dem ersten Verbindungsstangenteil 29a und dem Steuerkolben 31 und einem im ersten Hochdruckraum 9 zwischen dem erste Stangenteil 4 und dem zweiten Stangenteil 5 der Pleuelstange 1 angeordneten Federelement 66. Dabei ist das Kolbenelement 6 des zweiten Stangenteils 5 in der linken Bildhälfte in seiner einem hohen Verdichtungsverhältnis zugeordneten oberen Stellung und in der linken Bildhälfte in seiner einem niedrigen Verdichtungsverhältnis zugeordneten unteren Stellung mit komprimiertem Federelement 66 dargestellt.

Fig. 13 zeigt schematisch eine Steuerungseinrichtung 16, welche sich von den Fig. 2a und 2b dadurch unterscheidet, dass zwischen dem ersten Ventil 17 und dem ersten Hochdruckraum 9 im ersten Ölkanal 11 eine erste Drosseleinrichtung 71 angeordnet ist. Weiters ist zwischen dem zweiten Ventil 22 und dem zweiten Hochdruckraum 10 im zweiten Ölkanal 11 eine zweite Drosseleinrichtung 72 angeordnet. Durch die Drosseleinrichtungen71 und 72 können Druckwellen abgebremst werden, die die Steuerungseinrichtung 16 auslenken, insbesondere die Ventile 17, 22 öffnen könnten. Insbesondere können bei einer Längenverstellung der Pleuelstange 1 ein Ausbreiten von Druckwellen aus den Hochdruckräumen 9, 10 in das restliche Ölsystem des Fahrzeuges und daraus resultierende Beschädigungen verhindert werden.

Um dennoch ein rasches Füllen des ersten Hochdruckraumes 9 zu ermöglichen, kann die erste Drosseleinrichtung 71 über einen ersten Bypasskanal 73 umgangen werden, wobei im ersten Bypasskanal 73 ein erstes Bypass Ventil 75 angeordnet ist, welches beispielsweise durch ein in Richtung des ersten Hochdruckraumes 9 öffnendes Rückschlagventil gebildet ist. Der erste Bypasskanal 75 kann vom Ölversorgungskanal 13 oder vom ersten Verbindungskanal 14 ausgehen und mündet stromabwärts der ersten Drosseleinrichtung 71 in den ersten Ölkanals 11 oder in den ersten Hochdruckraum 9 ein. Analog dazu kann die zweite Drosseleinrichtung 72 durch einen zweiten Bypasskanal 76 umgehbar ausgebildet sein, welcher vom Ölversorgungskanal 13 oder vom zweiten Verbindungskanal 15 ausgeht und stromabwärts der zweiten Drosseleinrichtung 72 in den zweiten Ölkanal 12 einmündet. Weiters kann im zweiten Bypasskanal 74 ein erstes Bypass Ventil 75 angeordnet ist, welches beispielsweise durch ein in Richtung des zweiten Hochdruckraumes 10 öffnendes Rückschlagventil gebildet ist.

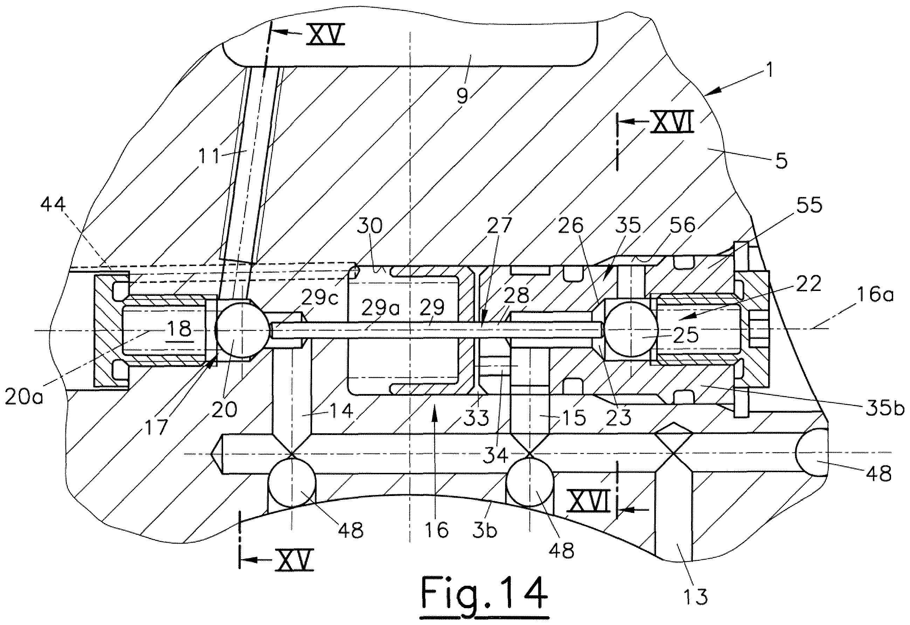

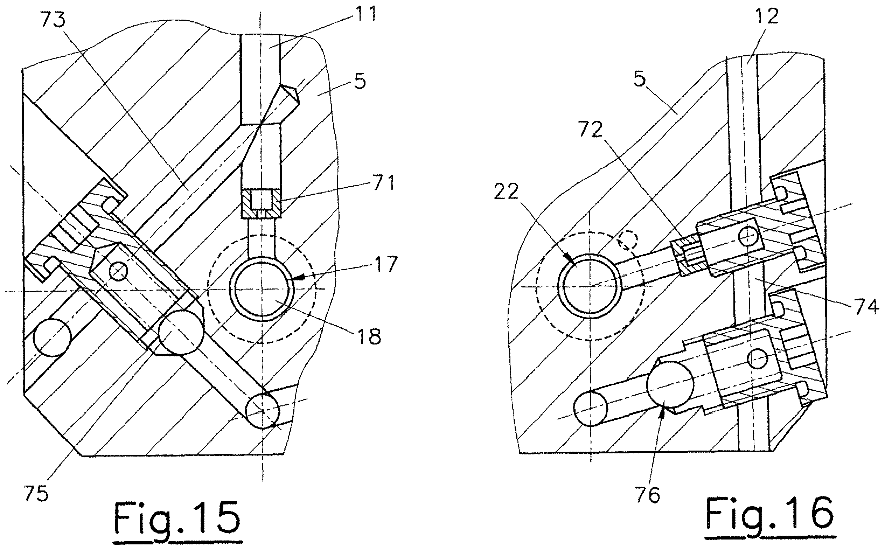

Dabei sind Varianten mit nur einer ersten Drosseleinrichtung 71 oder einer zweiten Drosseleinrichtung 72, oder sowohl einer ersten 71 und einer zweiten Drosseleinrichtung 72, jeweils ohne Bypasskanal 73, 74 oder in Kombination mit zumindest einem Bypasskanal 73, 74 möglich. Fig. 14 und 15 zeigen eine konstruktive Ausführung des in Fig. 13 dargestellten Schemas.

In Fig. 16 und 17 ist zeigen relative Verschiebungen h der beiden Stangenteile 4, 5 zueinander, sowie die Druckverläufe p₉ und p₁₀ im ersten Hochdruckraum 9 bzw. zweiten Hochdruckraum 10, aufgetragen über dem Kurbelwinkel KW für eine Verlängerung und eine Verkürzung der Pleuelstange 1, wobei in Fig. 17 ein Vollastbetrieb der Brennkraftmaschine bei einer Motordrehzahl von 2000 U/min und in Fig. 18 ein Leichtlastbetrieb der Brennkraftmaschine bei einer Motordrehzahl von etwa 4000 U/min dargestellt ist. Deutlich ist zu erkennen, dass in Fig. 17 die maximale Länge (h=3 mm) der Pleuelstange 1 nach etwa vier Arbeitszyklen und die minimale Länge (h=0 mm) der Pleuelstange nach einem Arbeitszyklus erreicht werden. In Fig. 18 werden die maximale Länge (h=3 mm) der Pleuelstange 1 nach etwa drei Arbeitszyklen und die minimale Länge (h=0 mm) der Pleuelstange nach etwa fünf Arbeitszyklen erreicht.

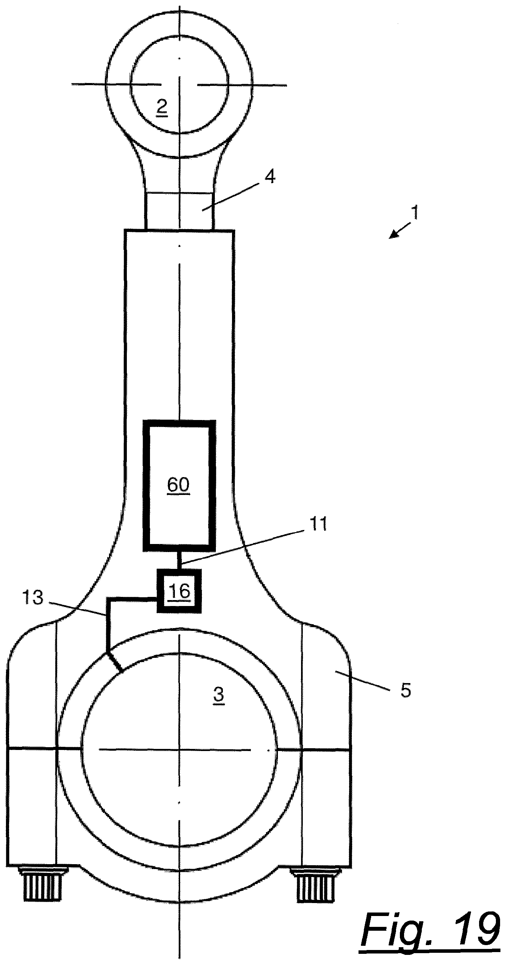

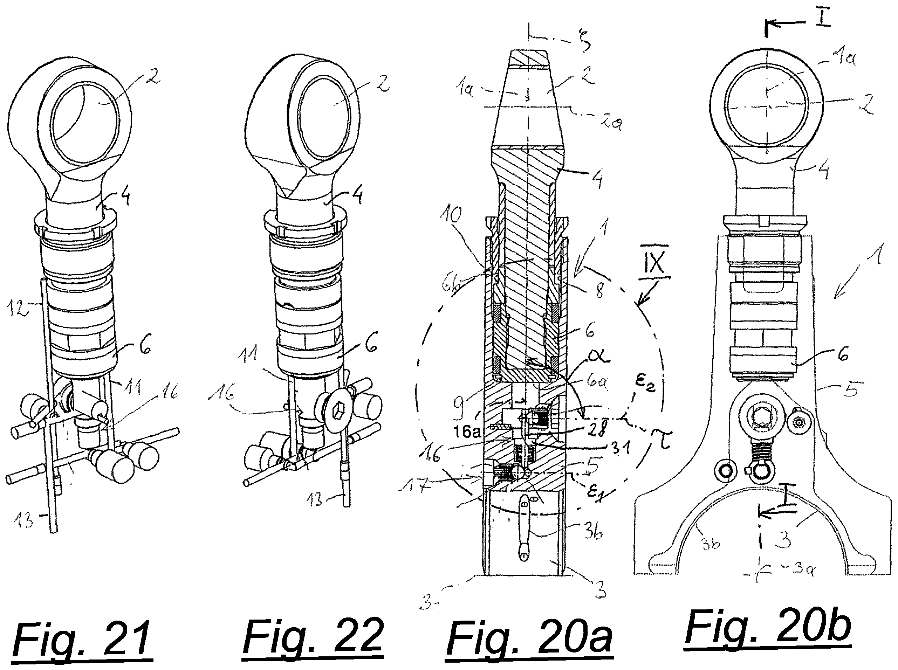

Fig. 19, 20a und 20b zeigen eine zweigeteilte, erfindungsgemäße Pleuelstange 1 für eine Hubkolbenmaschine, beispielsweise eine Brennkraftmaschine, mit einem kleinen Pleuelauge 2 für ein nicht weiter dargestelltes Kolbenbolzenlager und mit einem großen Pleuelauge 3 für ein nicht weiter dargestelltes Kurbelzapfenlager einer Brennkraftmaschine. Über das große Pleuelauge 3 ist die Pleuelstange 1 mit einer Kurbelwelle verbindbar. Die Drehsymmetrieachsen des kleinen bzw. großen Pleuelauges 2, 3 sind mit 2a bzw. 3a bezeichnet. Die Längsachse der Pleuelstange 1 ist mit 1a, eine auf die Drehsymmetrieachsen 2a und 3a des kleinen und großen Pleuelauges 2, 3 normal stehende und die Längsachse 1a der Pleuelstange 1 beinhaltende Längsmittelebene - die Schwingebene - der Pleuelstange 1 ist in diesem Fall mit ζ bezeichnet, wobei die Bezeichnungen ζ und □ im Folgenden synonym für die Bezeichnung der Schwingebene verwendet werden.

Die Pleuelstange 1 weist einen oberen ersten Stangenteil 4 mit dem kleinen Pleuelauge 2 und einen unteren zweiten Stangenteil 5 mit dem großen Pleuelauge 3 auf. Der erste Stangenteil 4 ist gegenüber dem zweiten Stangenteil 5 zwischen einer ausgezogenen Lage und einer eingeschobenen Lage in Richtung der Längsachse 1a der Pleuelstange 1 verstellbar. Dazu ist eine mit Hydraulikmedium, insbesondere Öl beschickbare Längenverstellvorrichtung 60 vorgesehen, die auf verschiedene Weise ausgeführt sein kann. Die Beschickung mit Hydraulikmedium erfolgt dabei über Hydraulikkanäle 11, 12 und einen Hydraulikmediumversorgungskanal 13, die über eine Steuereinrichtung 16 gesteuert werden. Die genaue Ausführung der Längenverstellvorrichtung 60 ist nicht Teil der Erfindung, daher wird nachfolgend ein mögliches Ausführungsbeispiel beschrieben. Darin ist am oberen ersten Stangenteil 4 ein im Wesentlichen zylindrisches Kolbenelement 6 befestigt. Auch andere Querschnittsformen des Kolbenelements 6 - mehreckig in Polygonform, Ellipsenform u.ä. - sind möglich.

Das Kolbenelement 6 ist in einem beispielsweise zylindrischen (korrespondierend zum Kolbenelement 6 - wie oben geschildert sind andere Querschnittsformen möglich) Führungskörper 8 des unteren zweiten Stangenteils 5 der Pleuelstange 1 axial verschiebbar geführt, wobei zwischen einer dem großen Pleuelauge 3 zugewandten ersten Stirnfläche 6a des Kolbenelementes 6 und dem zweiten Stangenteil 5 in zumindest einer Lage der beiden Stangenteile 4, 5 ein erster Hochdruckraum 9 aufgespannt wird. Das als Stufenkolben ausgebildete Kolbenelement 6 weist eine dem kleinen Pleuelauge 2 zugewandte zweite Stirnfläche 6b auf, welche an einen zweiten Hochdruckraum 10 grenzt, dessen zylindrische Mantelfläche vom Führungskörper 8 des zweiten Stangenteils 5 gebildet wird. Unter einem Stufenkolben wird im Allgemeinen ein Kolben - im vorliegenden Fall ein "zweiseitig wirkender Kolben" - mit unterschiedlich großen Wirkflächen verstanden, wobei eine der Wirkflächen (hier: die gegen den zweiten Hochdruckraum 10 orientierte Wirkfläche) als Ringfläche und die andere Wirkfläche als Kreisfläche ausgebildet ist. Durch die unterschiedlichen Wirkflächen lassen sich die hier beschriebenen Druckverhältnisse realisieren.

Die ringförmigen ersten und zweite Stirnflächen 6a, 6b bilden Druckangriffsflächen für ein in die Hochdruckräume 9, 10 geleitetes und unter Druck stehendes Betätigungsmedium, beispielsweise Motoröl.

Mit dem ersten Hochdruckraum 9 ist ein erster Hydraulikkanal 11 und mit dem zweiten Hochdruckraum 10 ein zweiter Hydraulikkanal 12 verbunden, wie in Fig. 3 und 4 angedeutet ist.

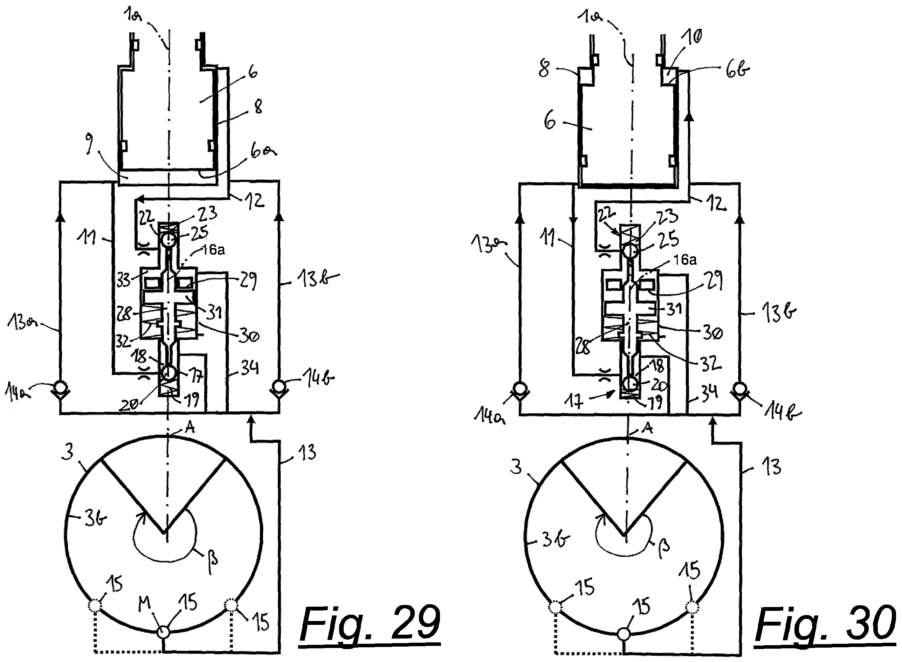

Das Schaltschema der in den Fig. 20a bis 22 und 23 bis 26 gezeigten zehnten und elften Ausführungsvarianten entspricht der in Fig. 29 und 30 dargestellten Schaltanordnung. Die Fig. 29 und 30 unterscheiden sich von den Fig. 20a bis 26 im Wesentlichen lediglich durch die Anordnung der Hubachsen 20a und 25a der ersten 17 und zweiten Ventile 22, welche bei den zehnten und elften Ausführungsvarianten normal zur Längsachse 1a bzw. zur Verschiebeachse 16a und in der zwölften Ausführungsvariante parallel zur Längsachse 1a bzw. zur Verschiebeachse 16a angeordnet sind.

Die Ölversorgung des ersten und zweiten Hochdruckraumes 9, 10 erfolgt über den Hydraulikmediumversorgungskanal 13, welcher vom großen Pleuelauge 3 ausgeht und somit mit dem Pleuellager 3b strömungsverbunden ist. Der Hydraulikmediumversorgungskanal 13 teilt sich in Teilkanäle 13a, 13b auf, wobei der erste Teilkanal 13a zum ersten Hochdruckraum 9 und der zweite Teilkanal 13b zum zweiten Hochdruckraum 10 führt. In jedem der Teilkanäle 13a, 13b ist ein Rückschlagventil 14a, 14b angeordnet, wobei jedes Rückschlagventil 14a, 14b den Durchfluss in Richtung des jeweiligen Hochdruckraumes 9, 10 freigibt und in der entgegengesetzten Richtung sperrt.

Zur Steuerung der Drücke in den ersten und zweiten Hochdruckräumen 9, 10 ist eine Steuereinrichtung 16 in der Pleuelstange 1, und zwar im unteren zweiten Stangenteil 5, vorgesehen, welche ein erstes Ventil 17 mit einem ersten Ventilraum 18 aufweist, in welchem ein durch eine erste Ventilfeder 19 vorgespannter erster Ventilkörper 20 gegen einen ersten Ventilsitz 21 gedrückt wird. In den ersten Ventilraum 18 mündet der erste Hydraulikkanal 11 über den ersten Zuführkanal 13 ein. Weiters weist die Steuereinrichtung 16 ein zweites Ventil 22 mit einem zweiten Ventilraum 23 auf, in welchem ein durch eine zweite Ventilfeder 24 vorgespannter zweiter Ventilkörper 25 gegen einen zweiten Ventilsitz 26 gedrückt wird, wobei der zweite Hydraulikkanal 12 über einen zweiten Zuführkanal 14 in den zweiten Ventilraum 23 einmündet. Weiters weist die Steuereinrichtung 16 ein entlang einer Verschiebeachse 16a zwischen dem ersten Ventil 17 und dem zweiten Ventil 22 verschiebbar gelagertes Verbindungselement 28 auf, welches in den Ausführungsbeispielen im Wesentlichen durch eine Verbindungsstange gebildet ist, welche fest mit einem in einem Steuerzylinder 30 verschiebbaren Steuerkolben 31 verbunden ist. Der durch eine Rückstellfeder 32 federbelastete Steuerkolben 31 grenzt an einen Steuerraum 33, in den eine Steuerleitung 34 einmündet, die mit dem Hydraulikmediumversorgungskanal 13 verbunden ist (Fig. 29 bis 32). Die Ventilkörper 20 bzw. 25 und das Verbindungselement 28 sind getrennte Bauteile. Erstes Ventil 17 und zweites Ventil 22 sind in Bereichen unterschiedlicher Enden 28a, 28b des Verbindungselementes 28 angeordnet.

Die ersten und zweiten Ventilkörper 20, 25 der ersten und zweiten Ventile 17, 22 werden bevorzugt durch Kugeln 20b, 25b gebildet. Um eine friktionsarme Betätigung der Kugeln 20b, 25b durch das als Verbindungsstange 29 ausgebildete Verbindungselement 28 zu ermöglichen sind die Enden 28a, 28b des Verbindungselementes 28 konisch oder sphärisch geformt.

In der ersten Stellung wird der erste Ventilkörper 20 und in der zweiten Stellung der zweite Ventilkörper 25 durch das Verbindungselement 28 jeweils entgegen der Rückstellkraft der Ventilfeder 19, 24 von einem zugeordneten ersten 21 bzw. zweiten Ventilsitz 26 abgehoben und der entsprechende erste 18 bzw. zweite Ventilraum 23 mit dem Hydraulikmediumversorgungskanal 13 strömungsverbunden. In der jeweils anderen Stellung liegt der erste Ventilkörper 20 bzw. zweite Ventilkörper 25 am ersten 21 bzw. zweiten Ventilsitz 26 auf und sperrt die Strömungsverbindung zum Hydraulikmediumversorgungskanal 13. Die Verschiebeachse 16a des Verbindungselements 28 ist in der oder geneigt zu einer Normalebene τ auf die Längsachse 1a der Pleuelstange 1 ausgebildet.

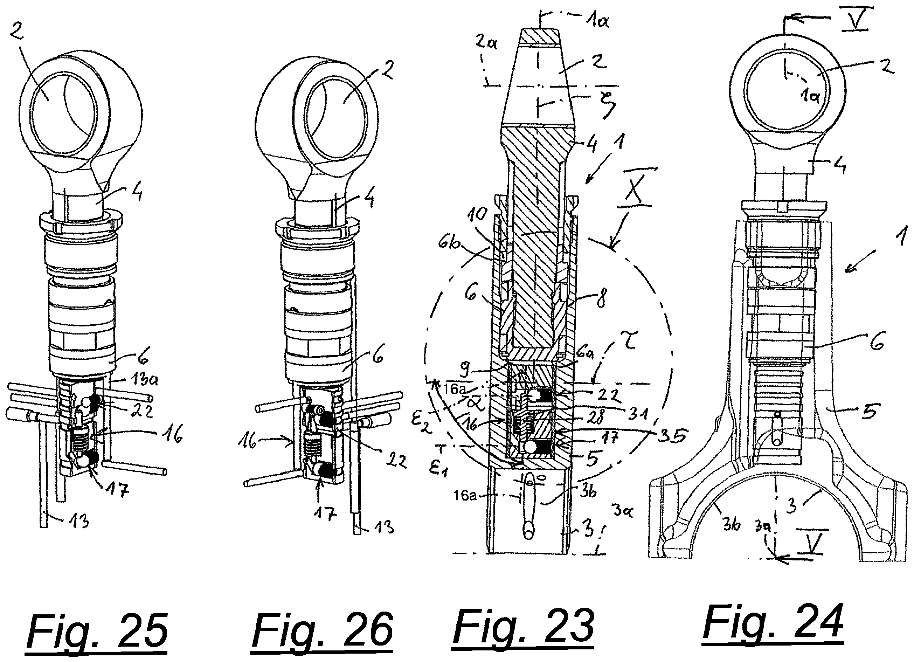

Bei der in den Fig. 20a bis 22 dargestellten zehnten Ausführungsvariante einerseits und der in den Fig. 23 bis 26 dargestellten elften Ausführungsvariante andererseits ist jeweils die Verschiebeachse 16a unter einem Winkel α von 90° zu einer Normalebene τ zur Längsachse 1a geneigt bzw. parallel zur Längsachse 1a der Pleuelstange 1 ausgebildet. Die ersten Hubachsen 20a und zweiten Hubachsen 25a sind dabei in Richtung der nicht weiter dargestellten Kurbelwellenachse, also normal zur Schwingebene ζ der Pleuelstange 1, ausgerichtet. Beim ersten Ausführungsbeispiel (Fig. 20a bis 22, 27) sind erstes Ventil 17 und zweites Ventil 22 an unterschiedlichen Seiten, beim elften Ausführungsbeispiel (Fig. 23 bis 26, 28) dagegen auf der gleichen Seite der Schwingebene ζ bzw. einer durch die Verschiebeachse 16a verlaufenden parallelen Ebene ζ' zur Schwingebene ζ angeordnet.

Mit zunehmender Drehzahl der Kurbelwelle der Brennkraftmaschine wirkt sich die Ölsäule in den Zuleitungen zur Steuereinrichtung 16 nachteilig aus, sodass die Steuerung der Längenverstellung behindert wird. Beschleunigungen von Punkten in der Nähe des großen Pleuelauges erreichen je nach Drehzahl und Geometrie mehrere Tausend g.

Um zu vermeiden, dass bei höheren Drehzahlen der Brennkraftmaschine Störungen bei der Steuerung der Längenverstellung auftreten, ist es vorteilhaft wenn die Verschiebeachse 16a mit der Normalebene τ auf die Längsachse 1a der Pleuelstange 1 einen Winkel α > 0° aufspannt. Der Winkel α kann maximal 90° betragen.

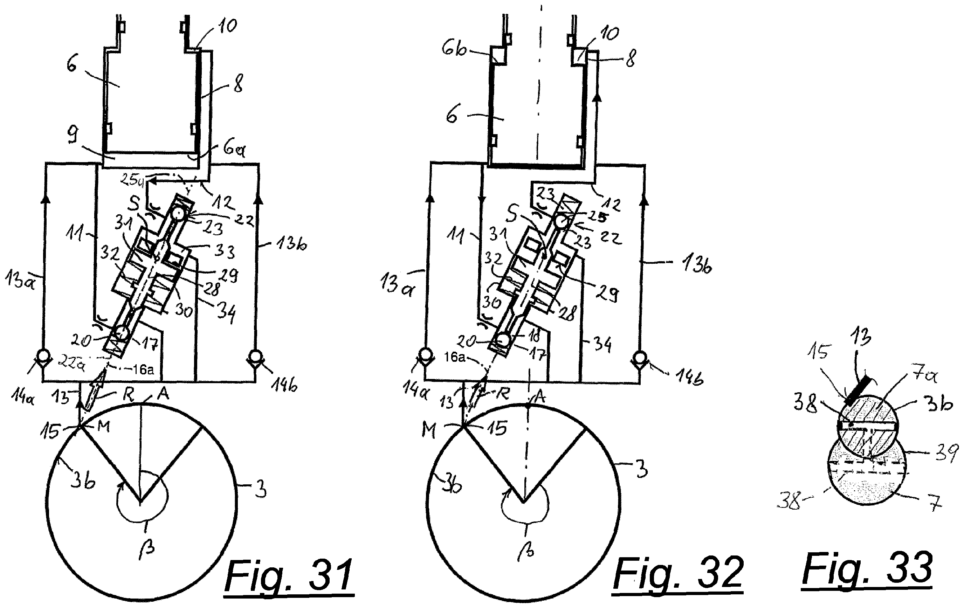

Besonders gute Ergebnisse lassen sich erzielen, wenn der Winkel α zwischen 30° und 60°, insbesondere zwischen 40° und 50, beträgt. Günstigerweise ist bei dieser Variante (siehe Fig. 31 und 32) gleichzeitig die Entnahme 15 des Pleuellagers 3b, wo der Hydraulikmediumversorgungskanal 13 seinen Ausgang nimmt, bei einem Umfangswinkel β von etwa 315° angeordnet Außerdem zeigt die Kraftkomponente parallel zur Pleuelachse 1a der Rückstellfeder 32 des Verbindungselements 28 in Richtung kleines Pleuelauge 2. Auf diese Weise lassen sich negative Einflüsse auf das Verschiebeelement 28 zu Folge der Massenträgheit des Hydrauliköls in allen ölführenden Hohlräumen der Pleuelstange 1 und der Massenkräfte des Verschiebelements 28 kompensieren. Besonders vorteilhaft ist es dabei, wenn die Verschiebeachse 16a parallel zu oder zusammenfallend mit einer Ölresultierenden R angeordnet ist. Als Ölresultierende R wird dabei die Ölsäule zwischen der Entnahmestelle 15 im Pleuellager 3b des großen Pleuelauges und ihrem Wirkpunkt auf die Steuereinrichtung 16 verstanden, wobei in einer Variante der Erfindung die Ölresultierende durch eine Verbindungslinie zwischen der Entnahmestelle im Pleuellager 3b (im Falle einer Entnahmebohrung der Bohrungsmittelpunkt) und der Wirkposition der Ölsäule auf die Steuereinrichtung 16 angenähert wird. Dadurch, dass die Verschiebeachse 16a parallel zu oder zusammenfallend mit der Ölresultierenden R ausgebildet wird, kann die Massenkraft der Ölsäule zwischen der Entnahme im Pleuellager 3b und dem Wirkpunkt auf die Steuereinrichtung 16 durch die Massenkraft des Verschiebeelements kompensiert werden. Zusätzlich muss das Material und Gewicht der Steuereinrichtung 16 abgestimmt werden, um negative Einflüsse zu minimieren. In den Fig. 31 und 32 ist die Ölresultierende R eingezeichnet als Verbindungslinie zwischen dem Bohrungsmittelpunkt M der Entnahme 15 im Pleuellager 3b des großen Pleuelauges 3 einerseits und dem Schnittpunkt S zwischen der Verschiebeachse 16a des Verbindungselementes 28 und der der Rückstellfeder 32 zugewandten Anschlagfläche 29 für das Verbindungselement 28. Die Rückstellfeder 32 ist dabei so angeordnet, dass eine parallel zur Längsachse 1a der Pleuelstange 1 gerichtete Kraftkomponente der Rückstellkraft in Richtung des kleinen Pleuelauges 2 wirkt.

Die Anordnung der Verschiebeachse 16a des Verbindungselementes 28 hinsichtlich der Ölresultierenden R erlaubt damit ein Abgleichen der Phasen der Schwingbewegungen der Ölsäule und des Verbindungselementes 28 .Die Amplitude der Schwingungen wird durch Anpassen der Masse des Verbindungselementes 28 so ausgeglichen, dass die Trägheitskraft des Verbindungselementes 28 der Trägheitskraft der Ölsäule äquivalent ist. Auf diese Weise lassen sich nachteilige Einflüsse durch Massenträgheitseffekte bei höheren Drehzahlen der Brennkraftmaschine kompensieren. Punkte in der Nähe des großen Pleuelauges erreichen je nach Drehzahl und Geometrie Beschleunigungen von mehreren Tausend g.

Wie aus den Fig. 29, 30 einerseits und Fig. 31, 32 andererseits zu entnehmen ist, geht der Hydraulikmediumversorgungskanal 13 vom durch das große Pleuelauge 3 gebildeten Pleuellager 3b aus. Auf die Zuleitungsbohrungen (=Hydraulikmediumversorgungskanal 13, Teilkanäle 13a, 13b) in der Pleuelstange 1 können im Betrieb Kräfte vom mehreren 1000-fachen der g-Kraft wirken. Gleichzeitig wirken auf das Pleuellager 3b Kräfte durch Feuer- und Trägheitskraft auf einen an der Pleuelstange befestigten Kolben. Um eine Störung der Steuerung der Längenverschiebung der Pleuelstange 1 durch diese Druckschwankungen im Pleuellager 3b durch Trägheitskräfte der Ölsäule zu vermeiden, ist es vorteilhaft, die Ölsäule möglichst kurz zu machen. Um eine ausreichende Tragfähigkeit des Lagers zu erhalten ist es vorteilhaft, wenn der Hydraulikmediumversorgungskanal 13 von einem Bereich des Pleuellagers 3b ausgeht, welcher sich in einem Bereich zwischen 40° und 320° Umfangswinkel β des großen Pleuelauges 3 befindet, wobei mit 0° jener Schnittpunkt A zwischen der Längsachse 1a der Pleuelstange 1 und dem großen Pleuelauge 3 definiert ist, welcher die geringste Entfernung zum kleinen Pleuelauge 2 aufweist. Besonders günstige Ergebnisse haben sich gezeigt, wenn der Hydraulikmediumversorgungskanal 13 vom großen Pleuelauge 3 in einem Bereich von etwa 315° Umfangswinkel β ausgeht (speziell Variante Fig. 31 und 32). Wenn der Winkel α nahe 90° gewählt ist, geht der Hydraulikmediumversorgungskanal 13 günstigerweise in einem Bereich von 135° bis 225°, idealerweise 180° Umfangswinkel β aus. Siehe dazu Fig. 29 und 30, wo eine Entnahme 15 bei 180° und strichliert Entnahmen 15 bei 135° und 225° angedeutet sind - Entnahmen dazwischen sind nicht eingezeichnet, aber möglich. Hier überwiegen die Vorteile der Entnahmeanordnung die Nachteile, die sich durch die etwas größeren Bohrungslängen (und daraus resultierenden längeren Ölsäulen) ergeben. Dadurch lassen sich Störungen im Betrieb aufgrund von Druckbelastung durch die Ölsäule, insbesondere im Fall kürzerer Bohrungen, minimieren. Gleichzeitig werden Bohrungen und Materialschwächungen in der Lagerschale im Bereich zwischen 320° und 40° vermieden, was eine unzulässige Schwächung der Tragfähigkeit des Lagers verhindert.

Fig. 33 zeigt den Bereich der Entnahme 15 des Pleuellagers 3b in Schnitt durch den Kurbelzapfen 7a einer Kurbelwelle 7, wobei die Ölbohrungen 38 zwischen Hauptlager 39 und Pleuellager 3b angedeutet sind.

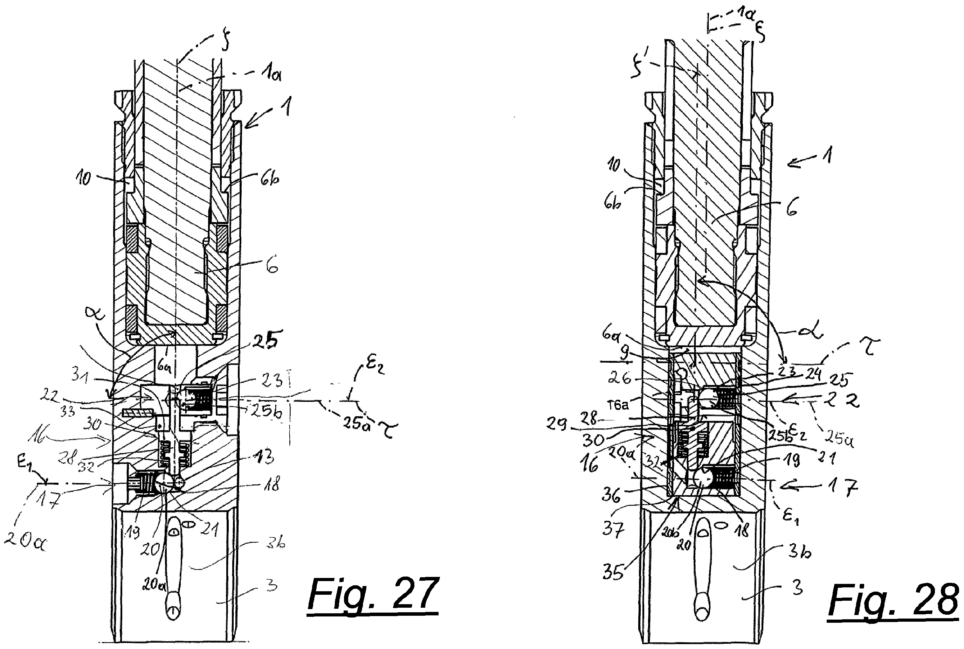

Wie in den Fig. 23 und 28 ersichtlich ist, kann die Steuereinrichtung 16 samt Verbindungselement 28 als Modul 35 ausgebildet und in einem im wesentlichen zylindrischen Gehäuse 36 angeordnet sein, welches als Einheit in eine zylindrische Ausnehmung 37 des zweiten Stangenteils 5 in Richtung der Längsachse 1a der Pleuelstange 1 eingeschoben wird. Dies erleichtert die Herstellung.

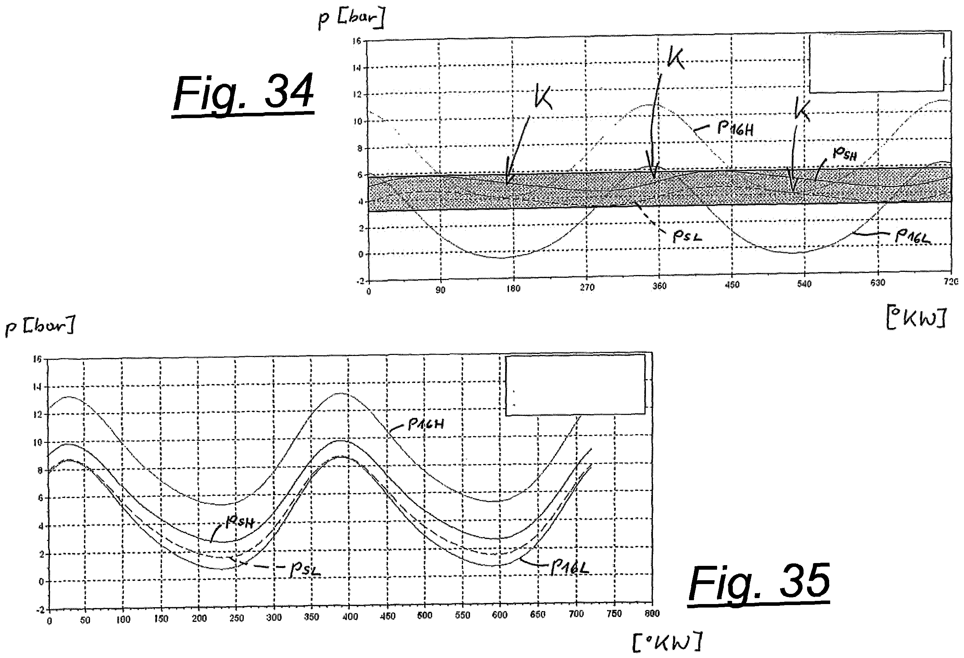

In Fig. 34 ist für eine Brennkraftmaschine ohne Anwendung der vorliegenden Erfindung der Druck p16L, p16H in der Steuereinrichtung 16, sowie der Auslegungssteuerdruck psL, psH über dem Kurbelwinkel KW, jeweils für niedrigen ("L") und hohen ("H") Steuerdruck aufgetragen, wobei der niedrige Auslegungssteuerdruck psL ("Niedrigdruckmodus") einer langen Pleuelstangenlänge und der hohe Auslegungssteuerdruck psH ("Hochdruckmodus") einer kurzen Pleuelstangenlänge zugeordnet ist. Deutlich ist zu erkennen, dass es in den mit K bezeichneten Bereichen zu Unregelmäßigkeiten kommt, da die auftretenden Drücke p16H, p16L in der Steuereinrichtung 16 im Hochdruckmodus unter oder im Niederdruckmodus über den jeweiligen Auslegungssteuerdrücken psH bzw. psL liegen. Dies führt im gezeigten Beispiel, welches den Druckverlauf bei einer Drehzahl der Kurbelwelle von etwa 4000 Umdrehungen pro Minute zeigt, zu einem unkontrollierbaren Verhalten der Steuereinrichtung 16.

Fig. 35 zeigt einen Druckverlauf für eine Drehzahl der Kurbelwelle über 5000 Umdrehungen pro Minute (U/min) analog zu Fig. 34, wobei eine erfindungsgemäße Pleuelstange mit den beschriebenen Maßnahmen zur Verringerung der störenden Einflüsse zu Folge der Trägheitskräfte bei hohen Drehzahlen zum Einsatz kommt. Deutlich ist zu erkennen, dass die auftretenden Drücke p16H, p16L in der Steuereinrichtung 16 im Hochdruckmodus über dem hohen Auslegungsdruck psH und im Niederdruckmodus unter dem niedrigen Auslegungssteuerdruck psL liegen. Dadurch ist gewährleistet, dass auch bei hohen Drehzahlen der Brennkraftmaschine die Steuerbarkeit der Längenverstellung der Pleuelstange 1 durch Massenkräfte nicht nachteilig beeinflusst wird.

Die Erfindung ermöglicht damit eine längenverstellbare Pleuelstange, die bei hohen Drehzahlen zuverlässig und reproduzierbar verstellt werden kann und gleichzeitig eine ausreichende Lagertragfähigkeit aufweist und einfach zu fertigen ist.

## Patentansprüche

1. Längenverstellbare Pleuelstange (1) für eine Hubkolbenmaschine, mit zumindest einem ersten Stangenteil (4), einem zweiten Stangenteil (5), einer Längenverstellvorrichtung (60) und einer Steuereinrichtung (16), wobei die beiden Stangenteile (4, 5) mittels der Längenverstellvorrichtung (60) in Richtung einer Längsachse (1a) der Pleuelstange (1), insbesondere teleskopartig, zu- und/oder ineinander verschiebbar sind, wobei die Längenverstellvorrichtung (60) über zumindest einen Hydraulikkanal (11, 12) mit einem Hydraulikmedium beschickbar ist und wobei der wenigstens eine Hydraulikkanal (11, 12) durch die Steuereinrichtung (16) mit zumindest einem Hydraulikmediumversorgungskanal (13) strömungsverbindbar ist,
**dadurch gekennzeichnet, dass** die Steuereinrichtung (16) ein erstes Ventil (17) und ein zweites Ventil (22) mit jeweils einem in einem Ventilraum (18; 23) angeordneten Ventilkörper (20; 25) aufweist, wobei die Ventilkörper (20, 25) jeweils durch eine Rückstellkraft gegen einen Ventilsitz (21; 26) pressbar sind, wobei ein erster Ventilraum (18) des ersten Ventils (17) mit einem ersten Hydraulikkanal (11) und ein zweiter Ventilraum (23) des zweiten Ventils (22) mit einem zweiten Hydraulickanal (12) strömungsverbunden ist, und die Ventilkörper (20; 25) über eine zumindest zwischen einer ersten Stellung und einer zweiten Stellung verschiebbare Verbindungseinrichtung (27) miteinander wirkverbunden sind, und wobei in der ersten Stellung der Verbindungseinrichtung (27) der erste Ventilkörper (20) und in der zweiten Stellung der Verbindungseinrichtung (27) der zweite Ventilkörper (25) durch die Verbindungseinrichtung (27) jeweils entgegen der Rückstellkraft von dem zugeordneten ersten bzw. zweiten Ventilsitz (21; 26) abhebbar ist und der entsprechende erste bzw. zweite Ventilraum (18; 23) mit dem Hydraulikmediumversorgungskanal (13) strömungsverbindbar ist, und jeweils in der anderen Stellung der Verbindungseinrichtung (27) der erste Ventilkörper (20) am ersten Ventilsitz (21) bzw. der zweite Ventilkörper (25) am zweiten Ventilsitz (26) aufliegt und die Strömungsverbindung zum Hydraulikmediumversorgungskanal (13) sperrt, wobei die Verbindungseinrichtung (27) zumindest ein zwischen einer ersten Stellung und einer zweiten Stellung verschiebbares Verbindungselement (28) aufweist, wobei der erste Ventilkörper (20) und der zweite Ventilkörper (25) über das Verbindungselement (28) miteinander wirkverbunden sind, und wobei das Verbindungselement (28) mit einem in einem Steuerzylinder (30) verschiebbaren Steuerkolben (31) fest verbunden ist, der an einen Steuerraum (33) grenzt, in welchen eine Steuerleitung (34) einmündet.

2. Pleuelstange (1) nach Anspruch 1, **dadurch gekennzeichnet, dass** die Steuerleitung (34) mit dem Hydraulikmediumversorgungskanal (13) strömungsverbunden ist.

3. Pleuelstange (1) nach Anspruch 1 oder 2, **dadurch gekennzeichnet, dass** die Ventilkörper (20, 25) und die Verbindungseinrichtung (27) getrennte Bauteile sind, insbesondere die Ventilkörper (20, 25) und das Verbindungselement (28), wobei die Verbindungseinrichtung (27), insbesondere das Verbindungselement (28), in der ersten Stellung vom zweiten Ventilkörper (25) und in der zweiten Stellung vom ersten Ventilkörper (20) beabstandet ist.

4. Pleuelstange (1) nach einem der vorgenannten Ansprüche, **dadurch gekennzeichnet, dass** das Verbindungselement (28) als axial verschiebbare Verbindungsstange (29) ausgebildet ist, die vorzugsweise normal zur Längsachse (1a) der Pleuelstange (1) angeordnet ist.

5. Pleuelstange (1) nach einem der vorgenannten Ansprüche, **dadurch gekennzeichnet, dass** das Verbindungselement (28), vorzugsweise die Verbindungsstange (29), entlang einer Verschiebeachse (16a) verschiebbar ist, wobei die Verschiebeachse (16a) vorzugsweise mit einer Normalebene (τ) auf eine Längsachse (1a) der Pleuelstange (1) einen Winkel α aufspannt, für welchen folgende Beziehung gilt:0°< α <=90° .

6. Pleuelstange (1) nach Anspruch 5, **dadurch gekennzeichnet, dass** die Verschiebeachse (16a) parallel zu einer Ölresultierenden (R) angeordnet ist.

7. Pleuelstange (1) nach einem der Ansprüche 4 bis 6,
wobei eine erste Hubachse (20a) des ersten Ventilkörpers (20) achsgleich mit der Längsachse (29a) der Verbindungsstange (29) ausgebildet ist, wobei das erste Ventil (17) im Bereich eines ersten Endes (29c) der Verbindungstange (29) angeordnet ist,
oder wobei die erste Hubachse (20a) des ersten Ventilkörpers (20) unter einem ersten Winkel (α) von etwa 90° +/- 60° zur Längsachse (29a) der Verbindungsstange (29) geneigt angeordnet ist.

8. Pleuelstange (1) nach einem der Ansprüche 4 bis 7,
wobei eine zweite Hubachse (25a) des zweiten Ventilkörpers (25) achsgleich mit der Längsachse (29a) der Verbindungsstange (29), ausgebildet ist, wobei das zweite Ventil (22) im Bereich eines zweiten Endes (29d) der Verbindungstange (29) angeordnet ist, und wobei vorzugsweise der erste Ventilsitz (21) des ersten Ventils (17) und der zweite Ventilsitz (26) des zweiten Ventils (22) einander abgewandt sind,
oder wobei die zweite Hubachse (25a) des zweiten Ventilkörpers (25) unter einem zweiten Winkel (γ) von etwa 90° +/- 60° zur Längsachse (29a) der Verbindungsstange (29) geneigt angeordnet ist.

9. Pleuelstange (1) nach einem der Ansprüche 4 bis 8, **dadurch gekennzeichnet, dass** zumindest ein Ende (29c, 29d) des Verbindungselementes (28), insbesondere zumindest ein Ende der Verbindungsstange (29), konisch oder sphärisch geformt ist und/oder zumindest ein Ende des ersten und/oder zweiten Übertragungselements (39, 42) konisch oder sphärisch geformt ist.

10. Pleuelstange (1) nach einem der Ansprüche 7 bis 9, **dadurch gekennzeichnet, dass** die erste Hubachse (20a) des ersten Ventilkörpers (20) und/oder die zweite Hubachse (25a) des zweiten Ventilkörpers (25) parallel zu einer Kurbelwellenachse verlaufend ausgebildet sind.

11. Pleuelstange (1) nach einem der Ansprüche 2 bis 10, **dadurch gekennzeichnet, dass** der Steuerzylinder (30) an seinem äußeren Umfang einen vorzugsweise durch eine umlaufende Ringnut (37a) gebildeten Ringraum (37) aufweist, welcher mit dem Steuerraum (33) oder einem Hochdruckraum (10) strömungsverbunden ist.

12. Pleuelstange (1) nach einem der vorhergehenden Ansprüche, wobei die Steuereinrichtung (16) zumindest einen in Richtung einer Verschiebeachse (16a) verschiebbar gelagerten Teil aufweist, und wobei die Verschiebeachse (16a) vorzugsweise in einer Schwingebene (ε) der Pleuelstange (1) - und insbesondere normal zur Längsachse (1a) der Pleuelstange (1) - angeordnet ist, **dadurch gekennzeichnet, dass** zumindest ein hin- und hergehender Teil der Steuereinrichtung (16) zumindest einen Auftriebskörper (60, 61) aufweist oder zumindest teilweise als Auftriebskörper (60, 61) ausgebildet ist.

13. Pleuelstange (1) nach einem der vorhergehenden Ansprüche, **dadurch gekennzeichnet, dass** die Verbindungseinrichtung (27) und/oder der Steuerkolben (31) zumindest ein Thermoelement (65) aufweist.

14. Pleuelstange (1) nach einem der vorhergehenden Ansprüche, **dadurch gekennzeichnet, dass** zwischen dem ersten Stangenteil (4) und dem zweiten Stangenteil (5) ein in Richtung Pleuelstangenverlängerung wirkendes Federelement (66) angeordnet ist, wobei vorzugsweise das Federelement (66) als Tellerfeder ausgebildet ist.

15. Pleuelstange (1) nach einem der vorhergehenden Ansprüche, **dadurch gekennzeichnet, dass** die Steuereinrichtung samt Ventilkörper und Verbindungseinrichtung (27) als Modul (35) ausgebildet und in einem Gehäuse (36) angeordnet ist, welches als Einheit in eine korrespondierende Ausnehmung (37) im ersten (4) oder zweiten Stangenteil (5) einschiebbar ist, wobei das das Gehäuse (36) und die Ausnehmung (37) vorzugsweise im Wesentlichen zylindrisch ausgeführt sind.

## Claims

1. A length-adjustable connecting rod (1) for a reciprocating piston engine, with at least a first rod part (4) and a second rod part (5), a length-adjusting means (60) and a control device (16), wherein the two rod parts (4, 5) being are displaceable, particularly telescopically, toward and/or in one another in the direction of a longitudinal axis (1a) of the connecting rod (1) by means of a length-adjusting means (60), wherein the length-adjusting means (60) can be charged via at least one hydraulic channel (11, 12) with a hydraulic medium, and wherein the at least one hydraulic channel (11, 12) is fluidly connectable via a control device (16) to at least one hydraulic medium supply channel (13),
**characterized in that** the control device (16) has a first valve (17) and a second valve (22), each with a valve body (20, 25) that is arranged in a valve chamber (18, 23), wherein it is possible for the valve bodies (20, 25) to be pressed by a restorative force against a valve seat (21, 26),
wherein a first valve chamber (18) of the first valve (17) is fluidly connected to a first hydraulic channel (11) and a second valve chamber (23) of the second valve (22) is fluidly connected to a second hydraulic channel (12), and the valve bodies (20, 25) are operatively interconnected via a connecting device (27) that can be displaced at least between a first position and a second position, and
wherein, in the first position of the connecting device (27), the first valve body (20) and, in the second position of the connecting device (27), the second valve body (25) can be lifted by the connecting device (27) counter to the restorative force from the associated first and second valve seat (21, 26), respectively, and the corresponding first and second valve chamber (18, 23) can be fluidly connected to the hydraulic medium supply channel (13) and, in the respective other position of the connecting device (27), the first valve body (20) rests on the first valve seat (21) and the second valve body (25) rests on the second valve seat (26) and block the fluid connection to the hydraulic medium supply channel (13),
wherein the connecting device (27) has at least one connecting element (28) that can be displaced between a first position and a second position, wherein the first valve body (20) and the second valve body (25) are operatively interconnected by means of the connecting element (28), and wherein the connecting element (28) is preferably firmly connected to a control plunger (31) that can be displaced in a control cylinder (30) and that borders a control chamber (33) into which a control line (34) leads.

2. The connecting rod (1) as set forth in claim 1, **characterized in that** the control line (34) being preferably fluidly connected to the hydraulic medium supply channel (13).

3. The connecting rod (1) as set forth in claim 1 or 2, **characterized in that** the valve bodies (20, 25) and the connecting device (27) are separate components, particularly the valve bodies (20, 25) and the connecting element (28), with the connecting device (27), particularly the connecting element (28), being spaced apart in the first position from the second valve body (25) and, in the second position from the first valve body (20).

4. The connecting rod (1) as set forth in any one of the preceding claims, **characterized in that** the connecting element (28) is embodied as an axially displaceable tie rod (29), preferably arranged so as to be normal to the longitudinal axis (1a) of the connecting rod (1).

5. The connecting rod (1) as set forth in at least one of the preceding claims, particularly as set forth in claim 4, **characterized in that** the connecting element (28), preferably the tie rod (29), can be displaced along a displacement axis (16a), wherein the displacement axis (16a) preferably spans an angle α with the normal plane (τ) with respect to the longitudinal axis (1a) of the connecting rod (1) for which the following relationship holds: 0°< α <=90°.

6. The connecting rod (1) as set forth in claim 5, **characterized in that** the displacement axis (16a) is arranged so as to be parallel to an oil resultant (R).

7. The connecting rod (1) as set forth in at least one of claims 4 to 6, **characterized in that** a first lift axis (20a) of the first valve body (20) is coaxial with the a longitudinal axis (29a) of the tie rod (29), with the first valve (17) being arranged in the vicinity of a first end (29c) of the tie rod (29) or
wherein the first lift axis (20a) of the first valve body (20) is arranged so as to be inclined at a first angle (α) of about 90° +/- 60° with respect to the longitudinal axis (29a) of the tie rod (29).

8. The connecting rod (1) as set forth in at least one of claims 4 to 7, **characterized in that** a second lift axis (25a) of the second valve body (25) is coaxial with a longitudinal axis (29a) of the tie rod (29), wherein the second valve (22) is arranged in the vicinity of a second end (29d) of the tie rod (29), and wherein the first valve seat (21) of the first valve (17) and the second valve seat (26) of the second valve (22) preferably face away from one another or
wherein the second lift axis (25a) of the second valve body (25) is arranged so as to be inclined at a second angle (γ) of about 90° +/- 60° with respect to the longitudinal axis (29a) of the tie rod (29).

9. The connecting rod (1) as set forth in at least one of claims 4 to 8, **characterized in that** at least one end (29c, 29d) of the connecting element (28), particularly at least one end of the tie rod (29), is conically or spherically shaped and/or at least one end of the first and/or second transmission element (39, 42) is conically or spherically shaped.

10. The connecting rod (1) as set forth in at least one of claims 7 to 9, **characterized in that** the first lift axis (20a) of the first valve body (20) and/or the second lift axis (25a) of the second valve body (25) are embodied so as to run parallel to a crankshaft axis.

11. The connecting rod (1) as set forth in at least one of claims 2 to 10, **characterized in that** the control cylinder (30) has on its outer periphery an annular space (37) that is preferably formed by a circumferential annular groove (37a) and fluidly connected to the control chamber (33) or a high-pressure chamber (10).

12. The connecting rod (1) as set forth in any one of the preceding claims, wherein the control device (16) has at least one part that is mounted so as to be displaceable in the direction of a displacement axis (16a), with the displacement axis (16a) being preferably arranged on an oscillation plane (ε) of the connecting rod (1) - particularly and normal to the longitudinal axis (1a) of the connecting rod (1) - **characterized in that** wherein at least one back-and-forth-moving part of the control device (16) has at least one buoyancy body (60, 61) or is embodied at least in part as a buoyancy body (60, 61).

13. The connecting rod (1) as set forth in at least one of the preceding claims, **characterized in that** wherein the connecting device (27) and/or the control plunger (31) has at least one thermocouple (65).

14. The connecting rod (1) as set forth in at least one of the preceding claims, **characterized in that** wherein a spring element (66) that acts toward the connecting rod extension is arranged between the first rod part (4) and the second rod part (5), with the spring element (66) being preferably embodied as a disc spring.

15. The connecting rod (1) as set forth in at least one of the preceding claims, **characterized in that** wherein the control device, along with the valve body and the connecting device (27), is embodied as a module (35) and arranged in a housing (36) that can be pushed as a unit into a corresponding cavity (37) in the first (4) or second rod part (5), with the housing (36) and the cavity (37) being preferably substantially cylindrical.

## Revendications

1. Bielle (1) à longueur ajustable pour une machine à pistons alternatifs, avec au moins une première partie de tige (4), une seconde partie de tige (5), un dispositif d'ajustement de longueur (60) et un système de commande (16), dans laquelle les deux parties de tige (4, 5) peuvent être coulissées l'une vers l'autre et/ou l'une dans l'autre, en particulier de manière télescopique, au moyen du dispositif d'ajustement de longueur (60) en direction d'un axe longitudinal (1a) de la bielle (1), dans laquelle le dispositif d'ajustement de longueur (60) peut être chargé par l'intermédiaire d'au moins un canal hydraulique (11, 12) en un milieu hydraulique et dans laquelle l'au moins un canal hydraulique (11, 12) peut être relié en communication fluidique par le système de commande (16) à au moins un canal d'alimentation en milieu hydraulique (13),
**caractérisée en ce que** le système de commande (16) présente une première soupape (17) et une deuxième soupape (22) avec respectivement un corps de soupape (20 ; 25) disposé dans une chambre de soupape (18 ; 23), dans laquelle les corps de soupape (20, 25) peuvent être pressés respectivement par une force de rappel contre un siège de soupape (21 ; 26), dans laquelle une première chambre de soupape (18) de la première soupape (17) est reliée en communication fluidique à un premier canal hydraulique (11) et une deuxième chambre de soupape (23) de la deuxième soupape (22) est reliée en communication fluidique à un deuxième canal hydraulique (12), et les corps de soupape (20 ; 25) sont en liaison fonctionnelle entre eux par l'intermédiaire d'un système de liaison (27) pouvant être coulissé au moins entre une première position et une deuxième position, et dans laquelle dans la première position du système de liaison (27), le premier corps de soupape (20) et, dans la deuxième position du système de liaison (27), le deuxième corps de soupape (25) peuvent être relevés par le système de liaison (27) respectivement à l'encontre de la force de rappel du premier ou du deuxième siège de soupape (21 ; 26) associé et la première ou la deuxième chambre de soupape (18 ; 23) correspondante peut être reliée en communication fluidique au canal d'alimentation en milieu hydraulique (13), et respectivement, dans l'autre position du système de liaison (27), le premier corps de soupape (20) repose au niveau du premier siège de soupape (21) ou le deuxième corps de soupape (25) repose au niveau du deuxième siège de soupape (26) et ferme la communication fluidique avec le canal d'alimentation en milieu hydraulique (13), dans laquelle le système de liaison (27) présente au moins un élément de liaison (28) pouvant être coulissé entre une première position et une deuxième position, dans laquelle le premier corps de soupape (20) et le deuxième corps de soupape (25) sont en liaison fonctionnelle l'un avec l'autre par l'intermédiaire de l'élément de liaison (28), et dans laquelle l'élément de liaison (28) est relié de manière solidaire à un piston de commande (31) pouvant être coulissé dans un cylindre de commande (30), qui jouxte une chambre de commande (33), dans laquelle débouche un conduit de commande (34).

2. Bielle (1) selon la revendication 1, **caractérisée en ce que** le conduit de commande (34) est relié en communication fluidique au canal d'alimentation en milieu hydraulique (13).

3. Bielle (1) selon la revendication 1 ou 2, **caractérisée en ce que** les corps de soupape (20, 25) et le système de liaison (27) sont des composants séparés, en particulier les corps de soupape (20, 25) et l'élément de liaison (28), dans laquelle le système de liaison (27), en particulier l'élément de liaison (28), est tenu à distance dans la première position du deuxième corps de soupape (25) et dans la deuxième position du premier corps de soupape (20).

4. Bielle (1) selon l'une quelconque des revendications précédentes, **caractérisée en ce que** l'élément de liaison (28) est réalisé sous la forme d'une tige de liaison (29) pouvant être coulissée axialement, qui est disposée de préférence à la normale par rapport à l'axe longitudinal (1a) de la bielle (1).

5. Bielle (1) selon l'une quelconque des revendications précédentes, **caractérisée en ce que** l'élément de liaison (28), de préférence la tige de liaison (29), peut être coulissé le long d'un axe de coulissement (16a), dans laquelle l'axe de coulissement (16a) forme de préférence avec un plan normal (τ) sur un axe longitudinal (1a) de la bielle (1) un angle a, pour lequel s'applique la relation suivante : 0° < α <= 90°.

6. Bielle (1) selon la revendication 5, **caractérisée en ce que** l'axe de coulissement (16a) est disposé de manière parallèle par rapport à une résultante de la force de pression de l'huile (R).

7. Bielle (1) selon l'une quelconque des revendications 4 à 6,
dans laquelle un premier axe de levage (20a) du premier corps de soupape (20) est réalisé sur le même axe que l'axe longitudinal (29a) de la tige de liaison (29), dans laquelle la première soupape (17) est disposée dans la zone d'une première extrémité (29c) de la tige de liaison (29) ,
ou dans laquelle le premier axe de levage (20a) du premier corps de soupape (20) est disposé de manière inclinée selon un premier angle (α) d'environ 90° +/- 60° par rapport à l'axe longitudinal (29a) de la tige de liaison (29).

8. Bielle (1) selon l'une quelconque des revendications 4 à 7,
dans laquelle un deuxième axe de levage (25a) du deuxième corps de soupape (25) est réalisé sur le même axe que l'axe longitudinal (29a) de la tige de liaison (29), dans laquelle la deuxième soupape (22) est disposée dans la zone d'une seconde extrémité (29d) de la tige de liaison (29), et dans laquelle de préférence le premier siège de soupape (21) de la première soupape (17) et le deuxième siège de soupape (26) de la deuxième soupape (22) sont opposés l'un à l'autre,
ou dans laquelle le deuxième axe de levage (25a) du deuxième corps de soupape (25) est disposé de manière inclinée selon un deuxième angle (γ) d'environ 90° +/- 60° par rapport à l'axe longitudinal (29a) de la tige de liaison (29).

9. Bielle (1) selon l'une quelconque des revendications 4 à 8, **caractérisée en ce qu'**au moins une extrémité (29c, 29d) de l'élément de liaison (28), en particulier au moins une extrémité de la tige de liaison (29), est façonnée de manière conique ou sphérique, et/ou au moins une extrémité du premier et/ou du deuxième élément de transmission (39, 42) est façonnée de manière conique ou sphérique.

10. Bielle (1) selon l'une quelconque des revendications 7 à 9, **caractérisée en ce que** le premier axe de levage (20a) du premier corps de soupape (20) et/ou le deuxième axe de levage (25a) du deuxième corps de soupape (25) sont réalisés de manière à s'étendre de manière parallèle par rapport à un axe de vilebrequin.

11. Bielle (1) selon l'une quelconque des revendications 2 à 10, **caractérisée en ce que** le cylindre de commande (30) présente au niveau de sa périphérie extérieure une chambre annulaire (37) formée de préférence par une rainure annulaire (37a) périphérique, laquelle est reliée en communication fluidique avec la chambre de commande (33) ou une chambre haute pression (10) .

12. Bielle (1) selon l'une quelconque des revendications précédentes, dans laquelle le système de commande (16) présente au moins une partie montée de manière à pouvoir coulisser en direction d'un axe de coulissement (16a), et dans laquelle l'axe de coulissement (16a) est disposé de préférence dans un plan d'oscillation (ε) de la bielle (1) - en particulier à la normale par rapport à l'axe longitudinal (1a) de la bielle (1) -, **caractérisée en ce qu'**au moins une partie de va-et-vient du système de commande (16) présente au moins un flotteur (60, 61) ou est réalisée au moins en partie en tant qu'un flotteur (60, 61).

13. Bielle (1) selon l'une quelconque des revendications précédentes, **caractérisée en ce que** le système de liaison (27) et/ou le piston de commande (31) présentent au moins un thermocouple (65).

14. Bielle (1) selon l'une quelconque des revendications précédentes, **caractérisée en ce qu'**un élément de ressort (66) agissant en direction du prolongement de bielle est disposé entre la première partie de tige (4) et la seconde partie de tige (5), dans laquelle de préférence l'élément de ressort (66) est réalisé en tant qu'un ressort Belleville.

15. Bielle (1) selon l'une quelconque des revendications précédentes, **caractérisée en ce que** le système de commande y compris le corps de soupape et le système de liaison (27) est réalisé en tant qu'un module (35) et est disposé dans un boîtier (36), lequel peut être enfilé en tant qu'une unité dans un évidement (37) correspondant dans la première (4) ou la seconde partie de tige (5), dans laquelle le boîtier (36) et l'évidement (37) sont réalisés de préférence de manière sensiblement cylindrique.
